# EUROPEAN PATENT APPLICATION

(11) **EP 2 270 479 A2**
(43) Date of publication of application: **05.01.2011**
(21) Application number: 10006718.0
(22) Date of filing: 29.06.2010
(51) Int. Cl.: G01N 23/22, G01N 23/223

(54) **Fluorescent X-ray analyzer and fluorescent X-ray analysis method**

(30) Priority: 30.06.2009 JP 2009155886; 30.06.2009 JP 2009155887; 30.06.2009 JP 2009155888
(71) Applicant: HORIBA, Ltd., Minami-ku Kyoto-shi Kyoto 601-8510 (JP)
(72) Inventor: Komatani, Shintaro, Kyoto-shi Kyoto 601-8510 (JP); Ohzawa, Sumito, Kyoto-shi Kyoto 601-8510 (JP); Kurozumi, Takuji, Kyoto-shi Kyoto 601-8510 (JP)
(74) Representative: Müller - Hoffmann & Partner

(57) **Abstract**

An analysis chamber 1a surrounded in a housing 1 is closed up tight by attaching a cell holder 2 to an opening portion 1b formed at the center of the top face of the housing 1. Also, the cell holder 2 holds a second X-ray transmission window material 23 in order to prevent a sample, which is leaked due to damage of a first X-ray transmission window material 54 of a sample cell 5, from adhering onto an X-ray tube 3, an X-ray detector 4 and the like. In performing fluorescent X-ray analysis, a displacement gas is supplied into the analysis chamber 1a and a window material space 20 formed between the first X-ray transmission window material 54 and the second X-ray transmission window material 23. The air inside the analysis chamber 1a and the air inside the window material space 20 are efficiently replaced with the displacement gas.

## Description

### BACKGROUND

### 1. Technical Field

The present invention relates to a fluorescent X-ray analyzer and a fluorescent X-ray analysis method in which a sample is analyzed by detecting fluorescent X-rays generated through irradiation with X-rays.

### 2. Description of Related Art

As an apparatus for analyzing a sample, a fluorescent X-ray analyzer for analyzing the composition of a sample by irradiating the sample with primary X-rays is conventionally used. In the fluorescent X-ray analyzer, fluorescent X-rays (secondary X-rays) generated by irradiating the sample with the primary X-rays is detected by a detector, and on the basis of a spectral distribution of the detected X-rays, for example, an element included in the sample may be specified and the concentration of the element may be calculated.

In the case where the sample is a fluid sample in the form of a liquid or a powder, the sample is contained in a vessel having an inlet port for a sample (hereinafter referred to as a sample cell), the inlet port is covered by an X-ray transmission film transmitting X-rays (i.e., an X-ray transmission window material), and the sample cell is placed in a measurement position of the fluorescent X-ray analyzer with the X-ray transmission film faced downward. Thereafter, the sample cell is irradiated with primary X-rays from below, and fluorescent X-rays thus generated are detected by an X-ray detector provided below the sample cell. Incidentally, the primary X-rays emitted from below the sample cell irradiate the fluid sample through the X-ray transmission film covering the inlet port of the sample cell, and the generated fluorescent X-rays are detected through the X-ray transmission film by the X-ray detector.

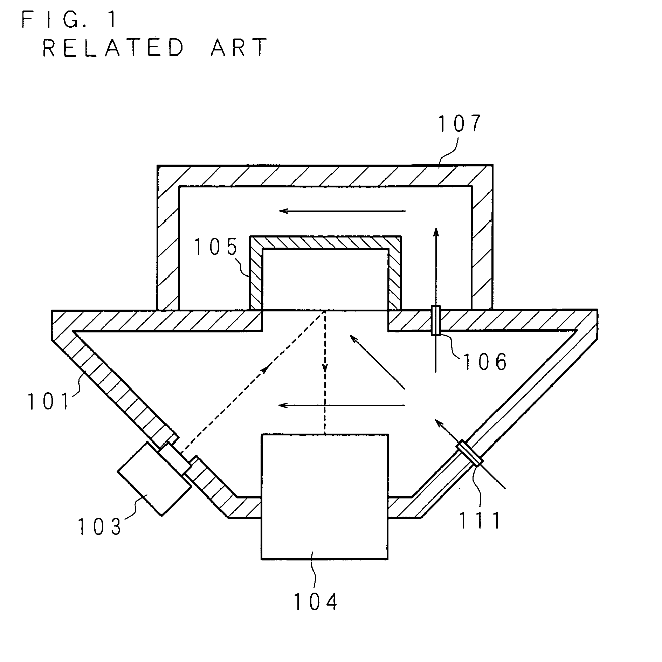

FIG. 1 is a schematic diagram illustrating the structure of a conventional fluorescent X-ray analyzer. In this drawing, a reference numeral 101 denotes a housing of the fluorescent X-ray analyzer, and a table for placing a sample cell 105 thereon is provided in an appropriate position on the top face of the housing 101. Furthermore, the housing 101 is provided with an X-ray tube 103 for irradiating the sample cell 105 placed on the table with primary X-rays from below, an X-ray detector 104 for detecting fluorescent X-rays generated from the sample through the irradiation with the primary X-rays emitted from the X-ray tube 103, and the like. Incidentally, broken line arrows of this drawing indicate part of the paths of the primary X-rays and the fluorescent X-rays, and the inside of the housing 101 corresponds to a space (an analysis chamber) where the primary X-rays and the fluorescent X-rays pass.

Among the fluorescent X-rays generated from the sample, X-rays with low energy have a property that they are easily absorbed by argon (Ar) included in the air, and therefore, when the fluorescent X-ray analysis is performed in the air, the detection accuracy for fluorescent X-rays with low energy generated from a light element is degraded. Furthermore, since the argon included in the air is excited, the detection accuracy for an element in the vicinity of the fluorescent X-rays of the argon is also degraded due to influence of interference. Accordingly, in order to improve the detection accuracy for a light element by suppressing the absorption of the fluorescent X-rays by the air, the air inside the space (the analysis chamber) where the paths of the X-rays are present is replaced with a gas such as a helium gas or a nitrogen gas (hereinafter referred to as the displacement gas). In the fluorescent X-ray analyzer of FIG. 1, the analysis chamber within the housing 101 is closed up tight, and an injection port 111 for injecting the displacement gas into the analysis chamber for discharging the air inside the analysis chamber is provided in an appropriate position on the housing 101.

In the conventional fluorescent X-ray analyzer, however, since the sample cell 105 is simply placed on the table of the housing 101, it is difficult to close up the analysis chamber completely tight. Therefore, the sample cell 105 placed on the table is covered with a sample chamber cover 107, and not only the analysis chamber but also a space covered with the sample chamber cover 107 (that is, a space where the sample cell 105 is placed, which is hereinafter referred to as the sample chamber) is also closed up tight, so as to replace also the air inside the sample chamber with the displacement gas. Specifically, an injection port 106 for guiding, into the sample chamber, the displacement gas having been injected into the analysis chamber is provided in an appropriate position on the top face of the housing 101, and the air inside the sample chamber is externally discharged by the displacement gas injected (introduced) through the injection port 106. It is noted that solid line arrows of the drawing indicate part of the path of the displacement gas. In this manner, the air may be completely excluded from the paths of the X-rays, resulting in improving the detection accuracy for the fluorescent X-rays generated from a light element. The air discharged from the analysis chamber and the sample chamber is discharged to the outside of the analyzer through an exhaust port provided in an appropriate position.

Moreover, Japanese Patent Application Laid-Open No. 9-127028 has proposed a fluorescent X-ray analyzer in which a sample cell table composed of a table outer frame, a table inner frame attached inside the table outer frame and an X-ray transmission sheet (an X-ray transmission window material) sandwiched between the table outer frame and the table inner frame for covering the inside of the frames is used as the table for placing a sample cell in a measurement position and is removably provided in the measurement position. In this fluorescent X-ray analyzer, even when a sample contained in the sample cell is leaked out because the sample cell is incompletely assembled or the X-ray transmission film of the sample cell is damaged by an unexpected accident or the like, the leaked sample is prevented from harmfully affecting the X-ray detector, the X-ray tube and the like provided beneath the measurement position.

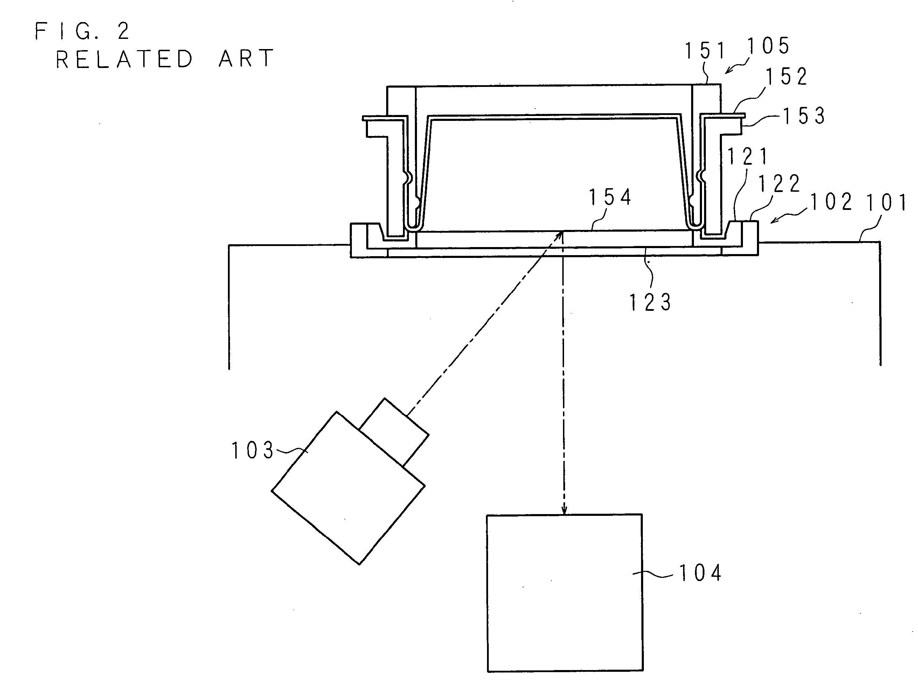

FIG. 2 is a schematic diagram illustrating the structure of the fluorescent X-ray analyzer disclosed in Japanese Patent Application Laid-Open No. 9-127028, in which like reference numerals are used to refer to like components illustrated in FIG. 1. The fluorescent X-ray analyzer includes a cell holder (a sample cell table) 102 for placing a sample cell 105 thereon.

The sample cell 105 containing a fluid sample is composed of a cylindrical cell inner frame 151, a sample cup (an inner frame cover) 152 covering an inner wall, an outer wall and a lower end portion of the cell inner frame 151 and having a recess for containing the fluid sample, and a cylindrical cell outer frame 153 externally fit on the cell inner frame 151 covered with the sample cup 152, and the recess of the sample cup 152 containing the fluid sample is sealed with an X-ray transmission window material (an X-ray transmission film) 154. The X-ray transmission window material 154 is sandwiched between the cell inner frame 151 covered with the sample cup 152 and the cell outer frame 153 to be held, so as to work as the bottom of the sample cell 105.

The cell holder 102 where the sample cell 105 is placed includes a disc-shaped cell holder inner frame (a table inner frame) 121 and a disc-shaped cell holder outer frame (a table outer frame) 122 having a circumference portion externally fit on the cell holder inner frame 121, and is removably provided in the measurement position of the fluorescent X-ray analyzer with the cell holder inner frame 121 and the cell holder outer frame 122 vertically fit on each other. An X-ray transmission window material 123 is sandwiched between the cell holder inner frame 121 and the cell holder outer frame 122 to be held, so that circular openings respectively formed at the centers of the cell holder inner frame 121 and the cell holder outer frame 122 may be covered and closed by the X-ray transmission window material 123.

The cell holder inner frame 121 of the cell holder 102 is provided with a ring-shaped projection projecting upward around the inner edge of the opening formed at the center thereof. The sample cell 105 containing the sample is placed on the cell holder 102 with a lower end portion of the cell inner frame 151 of the sample cell 105 covered with the sample cup 152 and the X-ray transmission window material 154 brought into contact with the projection provided on the cell holder inner frame 121 of the cell holder 102. The primary X-rays emitted from the X-ray tube 103 irradiate the fluid sample contained in the sample cell 105 through the X-ray transmission window material 123 of the cell holder 102 and the X-ray transmission window material 154 of the sample cell 105, and the fluorescent X-rays generated through this irradiation are detected by the X-ray detector 104 similarly through the X-ray transmission window materials 154 and 123.

For example, when the X-ray transmission window material 154 of the sample cell 105 is damaged, it is apprehended that the fluid sample contained in the sample cell 105 may leak out through the damaged portion of the X-ray transmission window material 154, but the opening of the cell holder 102 is covered by the X-ray transmission window material 123, and therefore, there is no fear of adhesion of the fluid sample onto the X-ray tube 103, the X-ray detector 104 and the like provided inside.

### SUMMARY

As illustrated in FIG. 1, when the space including the paths of the X-rays is filled with the displacement gas, not only the space including the paths of the X-rays (i.e., the analysis chamber) but also the sample chamber where the sample cell is placed is conventionally closed up tight for replacing also the air inside the sample chamber with the displacement gas. Accordingly, it is disadvantageously difficult to reduce the amount of displacement gas necessary for replacing the whole air inside the fluorescent X-ray analyzer, and it is also disadvantageously difficult to reduce processing time necessary for replacing the whole air inside the fluorescent X-ray analyzer with the displacement gas.

In the case where the sample cell 105 having the structure as illustrated in FIG. 2 is used, it is apprehended that the X-ray transmission window material 154 may be bent due to, for example, pressure change caused within the sample cell 105. When the X-ray transmission window material 154 is bent or when the sample cell 105 is placed on the cell holder 102 with its lower face inclined because, for example, the cell outer frame 153 comes in contact with the cell holder inner frame 121 owing to a trouble caused in the assembly of the sample cell 105, a distance between the fluid sample contained in the sample cell 105 and the X-ray detector 104 is changed. This change may cause an error in the analysis of the fluid sample by using the X-rays, resulting in a problem that the analysis accuracy is degraded. This problem cannot be overcome by the fluorescent X-ray analyzer disclosed in Japanese Patent Application Laid-Open No. 9-127028. Moreover, since the sample cell 105 is a general-purpose item, it is not preferred to solve the problem by changing, for example, the shape of the sample cell 105.

In the fluorescent X-ray analysis for a light element, primary X-rays are irradiated and fluorescent X-rays are detected in a helium atmosphere in general. However, since the helium gas is expensive and equipment for supplying the helium gas is limited, there is a demand for simple fluorescent X-ray analysis for a light element by using a less expensive gas more easily supplied. For example, a nitrogen gas is less expensive than the helium gas and equipment for supplying the nitrogen gas is widely spread, and therefore, when the nitrogen gas is used instead of the helium gas, the fluorescent X-ray analysis for a light element may be performed more simply. Actually, when primary X-rays are irradiated and fluorescent X-rays are detected in a nitrogen atmosphere, the fluorescent X-ray analysis for a light element may be performed with sufficient accuracy although the accuracy is slightly lower than that attained by using the helium gas.

Since the helium gas has different viscosity from another gas such as the nitrogen gas, flow rates per unit time of the gases are different from each other even when the gases are supplied under the same conditions. For example, since the nitrogen gas has higher viscosity than the helium gas, when the gases are supplied at the same pressure by using tubes with the same diameter, the flow rate per unit time of the nitrogen gas is smaller. When the flow rate per unit time of the gas is smaller, the air cannot be sufficiently replaced, and hence, the fluorescent X-ray analysis cannot be accurately performed. Accordingly, when a gas supplying mechanism such as the tube for supplying a gas into the analysis chamber of the fluorescent X-ray analyzer is once provided, a specific gas suitable to the provided gas supplying mechanism alone may be used. Therefore, the conventional fluorescent X-ray analyzer has a problem that a plurality of gases cannot be alternatively used as the displacement gas. For example, it is impossible to use a suitable gas in accordance with a sample to be analyzed or necessary accuracy. If a plurality of gas supplying mechanisms, such as a gas supplying mechanism for supplying the helium gas and a gas supplying mechanism for supplying the nitrogen gas, are individually provided in a fluorescent X-ray analyzer, although a plurality of gases may be alternatively used, the structure of the fluorescent X-ray analyzer is so complicated that the cost is increased.

The present invention has been devised in consideration of the aforementioned circumstances, and an object of the invention is providing a fluorescent X-ray analyzer having a structure in which the air inside the analyzer may be efficiently replaced with a displacement gas.

Another object of the invention is providing a fluorescent X-ray analyzer capable of accurately analyzing a fluid sample by preventing occurrence of an error derived from bent of an X-ray transmission window material provided in a sample cell.

Still another object of the invention is providing a fluorescent X-ray analyzer and a fluorescent X-ray analysis method in which a plurality of kinds of gases may be alternatively used as a displacement gas with a simple structure.

The fluorescent X-ray analyzer of the invention including X-ray irradiating means for irradiating, with primary X-rays, a sample contained in a sample container through a first X-ray transmission window material covering an opening of the sample container and detecting means for detecting fluorescent X-rays generated through irradiation with the primary X-rays is **characterized in that** a first closed space including the X-ray irradiating means and the detecting means has an opening portion for transmitting the primary X-rays irradiating the sample and the fluorescent X-rays emitted from the sample, and is characterized by comprising a placing section, for placing the sample container thereon, including a second X-ray transmission window material provided on the opening portion for covering the opening portion; and supplying means for supplying a prescribed gas to the first closed space and a second closed space formed between the first X-ray transmission window material and the second X-ray transmission window material in placing the sample container on the placing section.

According to the invention, the fluorescent X-ray analyzer includes the placing section for placing the sample container (sample cell) containing a sample thereon, the sample contained in the sample cell is irradiated with primary X-rays, and the sample is analyzed by detecting the fluorescent X-rays emitted from the sample. The sample cell may be, for example, a general-purpose vessel having an opening covered by the first X-ray transmission window material (X-ray transmission film). The first closed space including the X-ray irradiating means and the detecting means is provided with the opening portion for transmitting the primary X-rays irradiating the sample and the fluorescent X-rays emitted from the sample, and when the placing section is provided on the opening portion, the first closed space is covered by the second X-ray transmission window material included in the placing section. Furthermore, when the sample cell is placed on the placing section, the second closed space is formed between the first X-ray transmission window material and the second X-ray transmission window material. Therefore, in the analysis with fluorescent X-rays, the air inside the first closed space and the air inside the second closed space are replaced with the prescribed displacement gas, and there is no need to replace the whole air inside the fluorescent X-ray analyzer.

According to the invention, in the analysis with fluorescent X-rays, the air inside the first closed space including the X-ray irradiating means and the detecting means and the air inside the second closed space formed between the first X-ray transmission window material and the second X-ray transmission window material are replaced with the displacement gas. Therefore, differently from, for example, the conventional fluorescent X-ray analyzer, there is no need to replace the whole air inside the analyzer including the air inside the sample chamber corresponding to the space where the sample cell is placed. Accordingly, the amount of replacement gas necessary for replacing the air inside the analyzer may be reduced, and time necessary for the replacement may be reduced, resulting in attaining efficient replacement processing.

In the fluorescent X-ray analyzer of the invention, the supplying means supplies the prescribed gas to the first closed space and the second closed space after placing the sample container on the placing section and covering the sample container placed on the placing section with a prescribed covering member.

According to the invention, after the sample cell is placed on the placing section and the placed sample cell is covered with the prescribed covering member, the displacement gas is supplied to the first closed space and the second closed space for replacing the air inside the both closed spaces with the displacement gas. Therefore, the air inside the first closed space blocked by providing the placing section on the opening portion of the first closed space and the air inside the second closed space formed by placing the sample cell on the placing section may be definitely replaced with the displacement gas.

In the fluorescent X-ray analyzer of the invention, the placing section includes an inner frame for supporting the sample container placed thereon; an outer fame holding the second X-ray transmission window material together with the inner frame; and a through hole communicating inside and outside of the second closed space formed by the first X-ray transmission window material, the inner frame and the second X-ray transmission window material held by the inner frame and the outer frame in placing the sample container on the placing section.

According to the invention, the placing section for placing the sample cell thereon includes the inner frame supporting the sample cell placed thereon and the outer frame for holding, together with the inner frame, the second X-ray transmission window material covering the opening portion of the first closed space. Therefore, even when the sample leaks out from the sample cell supported by the inner frame, the second X-ray transmission window material held by the placing section prevents the leaked sample from adhering onto the X-ray irradiating means, the detecting means and the like. Furthermore, when the inner frame and the outer frame are released from each other, the second X-ray transmission window material held by the placing section may be easily exchanged. Moreover, the placing section further includes the through hole communicating inside and outside of the second closed space formed by the first X-ray transmission window material of the sample cell, the inner frame of the placing section and the second X-ray transmission window material held by the placing section when the sample cell is placed thereon. Therefore, since the displacement gas may be injected into the second closed space through the through hole, the air inside the second closed space may be also replaced with the displacement gas. Furthermore, in addition to the through hole for injecting the displacement gas, a through hole for discharging the air inside the second closed space may be separately provided.

Accordingly, since the air inside the second closed space formed between the first X-ray transmission window material and the second X-ray transmission window material may be replaced with the displacement gas, the accuracy of the analysis with the X-rays may be improved.

In the fluorescent X-ray analyzer of the invention including the placing section for placing the sample container thereon and having the opening to be covered by the first X-ray transmission window material, the X-ray irradiating means for irradiating, with primary X-rays, the sample container placed on the placing section and the detecting means for detecting fluorescent X-rays generated from the sample contained in the sample container through irradiation with the primary X-rays, the placing section includes an opening for transmitting the primary X-rays emitted from the X-ray irradiating means to the sample container; and a supporting part for supporting the sample container in such a manner that the primary X-rays passing through the opening reaches the first X-ray transmission window material covering the opening of the sample container, and the supporting part supports the sample container by coming into contact with the first X-ray transmission window material covering the opening inside the opening of the sample container.

According to the invention, the fluorescent X-ray analyzer includes the placing section for placing the sample container (the sample cell) containing a sample thereon, the sample is irradiated with the primary X-ray through the first X-ray transmission window material (the X-ray transmission film) provided in the sample cell, and the sample is analyzed by detecting fluorescent X-rays emitted from the sample. The sample cell may be a general-purpose vessel with an opening covered by the first X-ray transmission window material.

The placing section for placing the sample cell thereon is provided with the opening for transmitting the primary X-rays emitted from the X-ray irradiating means to the sample cell (the sample contained therein) and the fluorescent X-rays emitted from the sample cell toward the detecting means. Furthermore, the placing section includes the supporting part for supporting the sample cell, and the supporting part supports the sample cell so that the primary X-rays passing through the opening portion may reach the first X-ray transmission window material by, for example, allowing the first X-ray transmission window material of the sample cell to be positioned above the opening. Moreover, the supporting part supporting the sample cell supports the sample cell by coming into contact with the first X-ray transmission window material provided in an inside portion of the opening of the sample cell (namely, coming into contact with a portion of the first X-ray transmission window material where the sample is present on the opposite side).

In the conventional fluorescent X-ray analyzer illustrated in FIG. 2, the cell holder 102 supports the sample cell 105 by coming into contact with the lower end portion of the cell inner frame 151 of the sample cell 105. Therefore, it is apprehended that the position of the sample contained in the sample cell 105 relative to the X-ray detector 104 may be changed when the X-ray transmission window material 154 is bent so as to change its position relative to a portion where it is supported by the cell holder 102, or when the sample cell 105 is placed on the cell holder 102 with the lower face (the bottom face) thereof inclined because the cell outer fame 153 comes into contact with the cell holder inner frame 121. On the other hand, since the sample cell is supported by the supporting part of the placing section in contact with the first X-ray transmission window material inside the opening in this invention, the accuracy in the position for supporting the first X-ray transmission window material by the supporting part may be largely improved.

Accordingly, even when the first X-ray transmission window material of the sample cell is bent or there arises a problem in assembling the sample cell, the positional change of the first X-ray transmission window material relative to the detecting means may be suppressed, and the positional change of the sample contained in the sample cell relative to the detecting means may be suppressed, resulting in suppressing degradation of the analysis accuracy for the sample.

In the fluorescent X-ray analyzer of the invention, a portion of the supporting part in contact with the first X-ray transmission window material is a flat plane, and the flat plane is in close contact with the first X-ray transmission window material.

According to the invention, the portion where the supporting part of the placing section is in contact with the first X-ray transmission window material of the sample cell is a flat plane, and the sample cell placed thereon is supported by bringing the flat plane into close contact with the first X-ray transmission window material of the sample cell. Since the sample cell is supported through the close contact with the flat plane, the sample cell may be stably supported and the bent of the first X-ray transmission window material of the sample cell may be suppressed.

In the fluorescent X-ray analyzer of the invention, the opening of the placing section is capable of being covered by the second X-ray transmission window material, the supporting part is provided on an entire periphery of the opening, and the placing section includes a through hole communicating inside and outside of the closed space formed by the first X-ray transmission window material, the supporting part and the second X-ray transmission window material to cover the opening in placing the sample container thereon.

The fluorescent X-ray analyzer of the invention further includes an injection tube for injecting the gas into the closed space through the through hole.

According to the invention, the fluorescent X-ray analyzer includes the injection tube for injecting a gas such as a helium gas into the closed space through the through hole of the placing section. Therefore, the gas may be efficiently injected into and filled in the closed space formed by the sample cell and the placing section.

In the fluorescent X-ray analyzer of the invention, the placing section includes a ring-shaped inner frame on which the supporting part is provided; and a ring-shaped outer frame externally fit on the inner frame, and the inner frame and the outer frame fit on each other are capable of holding the second X-ray transmission window material therebetween.

According to the invention, the placing section for placing the sample cell thereon includes the ring-shaped inner frame on which the supporting part for supporting the sample cell is provided and the ring-shaped outer frame having the opening and fit on the inner frame, and the second X-ray transmission window material is sandwiched and held between the inner fame and the outer frame.

In the fluorescent X-ray analyzer of the invention, the placing section is removably attached on a housing holding the X-ray irradiating means and the detecting means, and the fluorescent X-ray analyzer further comprises a fixing section for fixing the placing section by pressing the placing section against the housing.

According to the invention, the placing section for placing the sample cell thereon is removably attached on the housing of the fluorescent X-ray analyzer in which the X-ray irradiating means, the detecting means and the like are held. Thus, the second X-ray transmission window material covering the opening of the placing section may be more easily exchanged. When the position for attaching the placing section is changed in this configuration, however, it is apprehended that the analysis accuracy may be degraded because the positional relationship between the sample cell placed thereon and the detecting means is changed. Therefore, according to the invention, the fluorescent X-ray analyzer includes the fixing section for fixing the placing section by pressing it against the housing, so as to prevent the positional change of the placing section and prevent the degradation of the analysis accuracy.

In the fluorescent X-ray analyzer of the invention including the X-ray irradiating means for irradiating the sample with the primary X-rays and the detecting means for detecting the fluorescent X-rays emitted from the sample through the irradiation with the primary X-rays, in which the fluorescent X-ray analysis is performed after attaining an atmosphere of a prescribed gas in an internal space at least including a space where the primary X-rays emitted from the X-ray irradiating means pass before irradiating the sample and a space where the fluorescent X-rays generated by the sample pass before entering the detecting means, the fluorescent X-ray analyzer further comprises a tube for supplying a gas to the internal space; a plurality of pressure adjustors provided in parallel in the middle of the tube; and path switching means for alternatively switching a path of a gas to be supplied to the internal space out of a plurality of paths passing through the plurality of pressure adjustors, and each of the plurality of pressure adjustors adjusts a pressure of a gas to be supplied to the internal space to a pressure suitable to each of a plurality of kinds of gases.

According to the invention, in the fluorescent X-ray analyzer in which the fluorescent X-ray analysis is performed after attaining an atmosphere of a prescribed gas in the internal space (the first closed space and the second closed space) including the spaces where the primary X-rays and the fluorescent X-rays pass, the plural pressure adjustors are provided in parallel in the middle of the tube for supplying a gas to the internal space, each of the plural pressure adjustors adjusts the pressure of a gas to the pressure in accordance with each of the plural kinds of gases, and a path of the gas may be switched so as to select which of the pressure adjustors is to be passed. When the pressure adjustors where the gas passes are alternately switched in accordance with the kind of gas, the gas may be supplied to the internal space at a pressure in accordance with the kind of gas.

According to the invention, any of a plurality of gases different from one another in the pressure necessary for supply because of their different viscosities may be supplied to the internal space of the fluorescent X-ray analyzer by using the same tube. Accordingly, a plurality of kinds of gases may be alternatively used as the displacement gas, and hence, the gases may be alternatively used in accordance with a sample to be analyzed or necessary accuracy. No matter which of the plurality of kinds of gases is used, the most of portions of the tube excluding the pressure adjustors may be commonly used, and hence, the increase of the cost of the fluorescent X-ray analyzer may be minimized.

In the fluorescent X-ray analyzer of the invention, each of the plurality of pressure adjustors is configured in such a manner that a flow rate per unit time of a gas to be supplied to the internal space through the tube is a precedently determined common flow rate not depending upon the kinds of gases.

According to the invention, in each of the pressure adjustors of the fluorescent X-ray analyzer, the pressure is set in accordance with the kinds of gases so that the flow rate per unit time of a gas to be supplied to the internal space may be the common flow rate not depending upon the kinds of gases. Therefore, no matter which of the plurality of kinds of gases is used, the gas is supplied to the internal space at the same flow rate per unit time.

Accordingly, even when the kind of gas used as the displacement gas is changed, the flow rate of the gas is not changed, and hence, the fluorescent X-ray analysis may be executed stably no matter which of the gases is used.

The fluorescent X-ray analyzer of the invention further comprises flow rate adjusting means for adjusting a flow rate per unit time of a gas to be supplied to the internal space to one of two flow rates precedently determined.

In the fluorescent X-ray analyzer of the invention, the tube branches into two branch tubes different from each other in a flow rate per unit time of a gas passing therethrough, the two branch tubes are both connected to the internal space, and the flow rate adjusting means is an on-off valve for opening/closing one of the branch tubes allowing a gas to pass therethrough at a relatively high flow rate per unit time out of the two branch tubes.

The fluorescent X-ray analysis method of the invention for performing fluorescent X-ray analysis of a sample by using the fluorescent X-ray analyzer of the invention is characterized by comprising the steps of allowing the path switching means to switch a path of a gas in such a manner that a gas passes through any of the pressure adjustors corresponding to a kind of gas to be supplied to the internal space; allowing the flow rate adjusting means to adjust a flow rate per unit time of the gas to be supplied to the internal space to a higher flow rate out of the two flow rates; allowing the flow rate adjusting means to adjust the flow rate per unit time of the gas to be supplied to the internal space to a lower flow rate out of the two flow rates after continuously supplying the gas to the internal space for a prescribed period of time; and starting the fluorescent X-ray analysis after adjusting the flow rate per unit time of the gas to be supplied to the internal space to the lower flow rate out of the two flow rates.

According to the invention, the tube for supplying the gas into the internal space of the fluorescent X-ray analyzer branches into the two branch tubes different in the flow rate per unit time, the branch tubes are both connected to the internal space, and one of the branch tubes with a higher flow rate is opened/closed by the on-off valve, so as to adjust the flow rate per unit time of the gas to be supplied to the internal space by two stages. In executing the fluorescent X-ray analysis, the gas is supplied to the internal space at a higher flow rate, and the fluorescent X-ray analysis is started after adjusting the flow rate of the gas to a lower flow rate. Since the gas is supplied to the internal space first at a higher flow rate, the air inside the internal space may be rapidly and definitely replaced with the gas. After replacing the air with the gas, the atmosphere of the gas may be retained even if the flow rate per unit time of the gas is lowered.

Furthermore, according to the invention, since the gas is supplied to the internal space first at a higher flow rate, the air inside the internal space may be definitely replaced with the gas, and since the fluorescent X-ray analysis is executed after adjusting the flow rate of the gas to be lower, the accuracy of the fluorescent X-ray analysis may be improved and the amount of displacement gas to be consumed may be reduced.

### BRIEF DESCRIPTION OF THE SEVERAL VIEW OF THE

### DRAWINGS

FIG. 1 is a schematic diagram illustrating an example of the structure of a conventional fluorescent X-ray analyzer;
FIG. 2 is a schematic diagram illustrating another example of the structure of the conventional fluorescent X-ray analyzer;
FIG. 3 is a schematic diagram roughly illustrating the structure of a fluorescent X-ray analyzer of the invention;
FIG. 4 is a schematic diagram illustrating an example of the structure of a fluorescent X-ray analyzer according to the invention;
FIG. 5 is an exploded perspective view of a sample cell;
FIG. 6 is an exploded perspective view of a cell holder;
FIGS. 7A and 7B are schematic diagrams explaining a method for injecting a displacement gas;
FIG. 8 is a schematic diagram illustrating an example of a mechanism for supplying a displacement gas into an analysis chamber and a window material space;
FIG. 9 is a schematic diagram illustrating another example of the mechanism for supplying the displacement gas into the analysis chamber and the window material space;
FIG. 10 is a schematic diagram illustrating the structure of the cell holder;
FIG. 11 is a schematic diagram explaining processing for placing the sample cell on the cell holder;
FIG. 12 is a schematic diagram illustrating another example of the structure of the fluorescent X-ray analyzer according to the invention;
FIG. 13 is a flowchart illustrating procedures in a fluorescent X-ray analysis method according to the invention;
FIGS. 14A, 14B and 14C are schematic diagrams illustrating flow of a helium gas in performing fluorescent X-ray analysis;
FIGS. 15A and 15B are schematic diagrams illustrating flow of a nitrogen gas in performing fluorescent X-ray analysis; and
FIG. 16 is a schematic diagram illustrating still another example of the structure of the fluorescent X-ray analyzer according to the invention.

### DETAILED DESCRIPTION

The present invention will now be specifically described with reference to the accompanying drawings illustrating preferred embodiments.

### (EMBODIMENT 1)

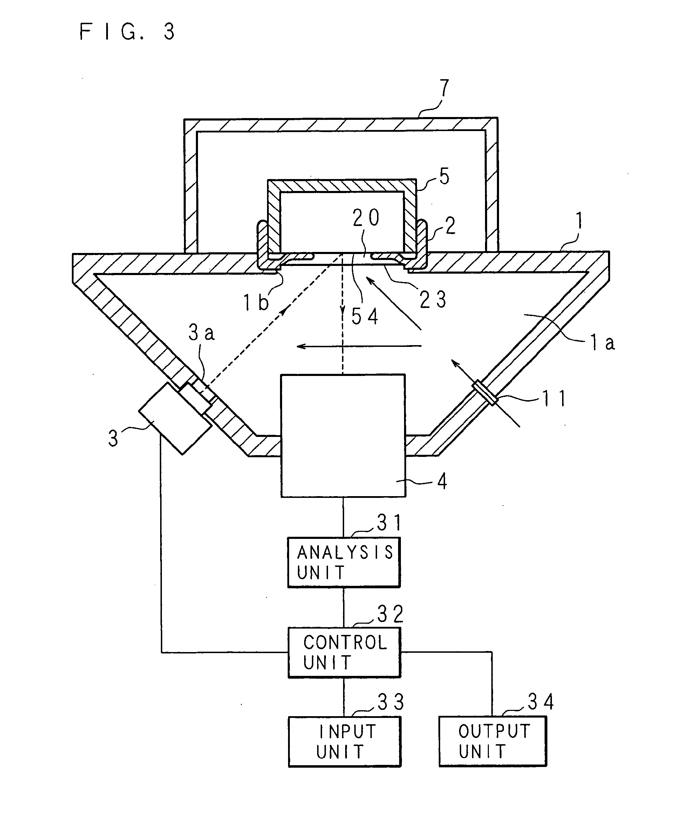

FIG. 3 is a schematic diagram roughly illustrating the structure of a fluorescent X-ray analyzer. In this drawing, a reference numeral 1 denotes a housing of the fluorescent X-ray analyzer, and the top face of the housing 1 is a flat plane, which may be used as a workbench by an operator using the fluorescent X-ray analyzer. An opening portion 1b is formed at the center of the top flat face of the housing 1, and a cell holder 2 is attached to be fit in this opening portion 1b. Then, a sample cell (corresponding to a sample container) 5 containing a sample to be analyzed is placed on the cell holder (corresponding to a placing section) 2. Furthermore, in performing analysis of the sample with X-rays, the sample cell 5 placed on the cell holder 2 is covered with a cover (corresponding to a covering member) 7.

In the housing 1, an X-ray detector (corresponding to detecting means) 4 is fixed directly below the opening portion 1b where the cell holder 2 is attached, and an X-ray tube (corresponding to X-ray irradiating means) 3 is fixed in a position diagonally below the opening portion 1b at an angle of approximately 30°. The X-ray tube 3 guides primary X-rays generated by an X-ray source to a prescribed irradiation area, so that the lower face of the sample cell 5 placed on the cell holder 2 (namely, the sample contained in the sample cell 5) may be irradiated with the primary X-rays. The X-ray detector 4 detects fluorescent X-rays generated through the irradiation with the primary X-rays of the sample contained in the sample cell 5 by the X-ray tube 3.

The X-ray detector 4 uses a proportional counter tube as a detection device, so as to output electric signals in proportion to energy of fluorescent X-rays entering the proportional counter tube. It is noted that the X-ray detector 4 may use, as the detection device, a detection device other than the proportional counter tube, such as a semiconductor detection device. The X-ray detector 4 is connected to an analysis unit 31 for analyzing the outputted electric signals. The analysis unit 31 performs processing for receiving the electric signals outputted by the X-ray detector 4, counting the intensities and the number of the respective electric signals corresponding to the energy of the fluorescent X-rays, and obtaining the relationship between the energy of the fluorescent X-rays and the counted number, namely, the spectrum of the fluorescent X-rays. It is noted that the analysis unit 31 may further perform qualitative analysis or quantitative analysis of an element having generated the fluorescent X-rays on the basis of the obtained spectrum of the fluorescent X-rays. The X-ray tube 3 and the analysis unit 31 are connected to a control unit 32 for controlling the operations of the X-ray tube 3 and the analysis unit 31. Also, the control unit 32 is connected to an input unit 33 such as a keyboard or a touch panel operated by a user for inputting various instructions and an output unit 34 such as a display or a printer for outputting the result of the analysis.

The cell holder 2 is provided with a second X-ray transmission window material (preferably, an X-ray transmission film) 23 and a first X-ray transmission window material (preferably, an X-ray transmission film) 54 is used as the lower face of the sample cell 5, which will be described in detail later. Accordingly, the primary X-rays emitted from the X-ray tube 3 irradiate the sample contained in the sample cell 5 through the X-ray transmission window materials 23 and 54, and the fluorescent X-rays emitted from the sample reach the X-ray detector 4 through the X-ray transmission window materials 54 and 23 to be detected (as illustrated with broken line arrows in the drawing). Since the second X-ray transmission window material 23 is thus provided below the first X-ray transmission window material 54 of the sample cell 5, even when the sample leaks out from the sample cell 5 because of damage of the first X-ray transmission window material 54, the second X-ray transmission window material 23 functions as a protection film, and hence, the leaked sample may be prevented from adhering onto the X-ray tube 3, the X-ray detector 4 and the like.

When the cell holder 2 is attached in the opening portion 1b of the housing 1, the opening portion 1b of the housing 1 is covered by the cell holder 2, and hence, the inside of the housing 1 is an enclosed space (corresponding to a first closed space or an analysis chamber 1a). Incidentally, in analyzing a sample, a displacement gas such as a helium gas or a nitrogen gas is injected (introduced) into the inside of the housing 1 through an injection port (corresponding to supplying means) 11 (as illustrated with solid line arrows in the drawing), so as to replace the air inside the analysis chamber 1a with the displacement gas. The X-ray tube 3 is attached on the housing 1 with a sealing metal foil 3a sandwiched therebetween so as not to come into direct contact with the displacement gas to be replaced with the air inside the analysis chamber 1a. Depending upon the type of sample to be analyzed, a primary filter is used in some cases for emitting the primary X-rays from the X-ray tube 3 through the primary filter in order to reduce the background of each spectrum of the fluorescent X-rays. In such cases, the sealing metal foil 3a may be replaced with the primary filter.

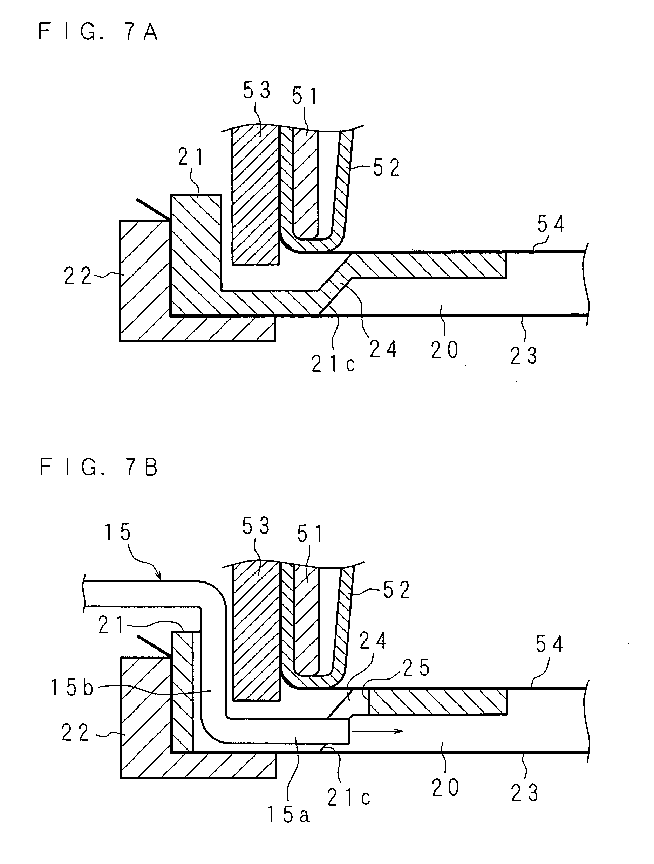

Furthermore, when the sample cell 5 is placed on the cell holder 2, there arises a space (corresponding to a second closed space or a window material space 20) between the second X-ray transmission window material 23 of the cell holder 2 and the first X-ray transmission window material 54 of the sample cell 5. The displacement gas is injected also into this space through an injection tube (corresponding to supplying means) 15 (see FIG. 7B) in analyzing the sample, so as to replace the air inside the space with the displacement gas. In the fluorescent X-ray analyzer of the invention, since the analysis chamber 1a and the window material space 20 are both enclosed spaces, there is no need to close up tight a sample chamber where the sample cell 5 is placed, and there is no need to replace the air inside the sample chamber with the displacement gas. Therefore, there is no need to employ a configuration for replacing the air inside the sample chamber with the displacement gas but the sample chamber may be simply covered with the cover 7.

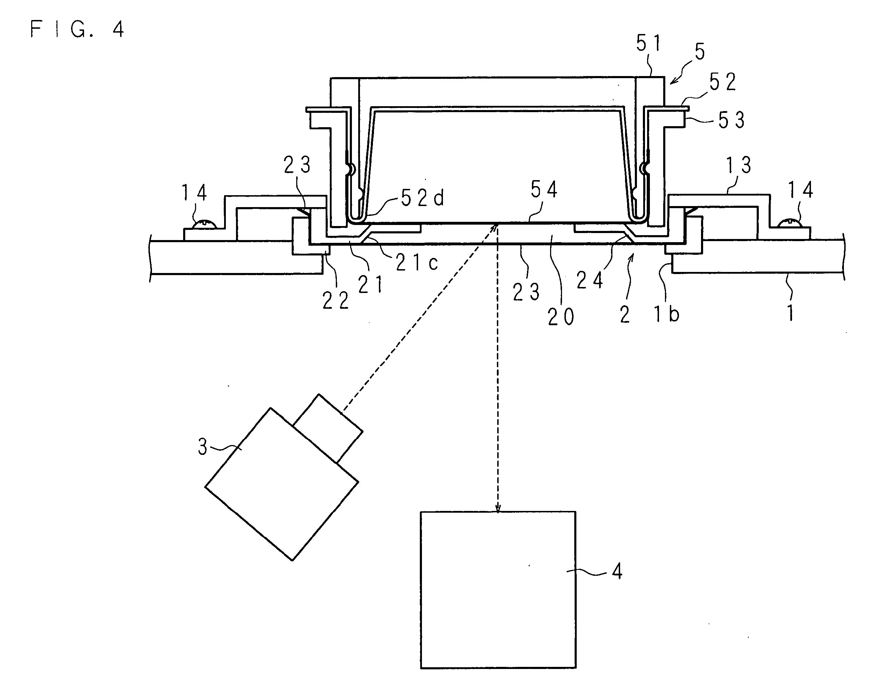

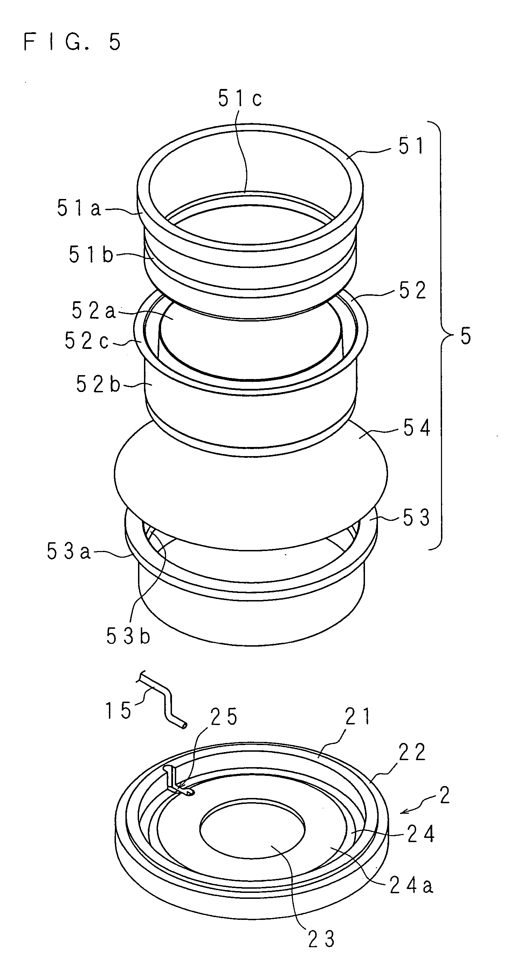

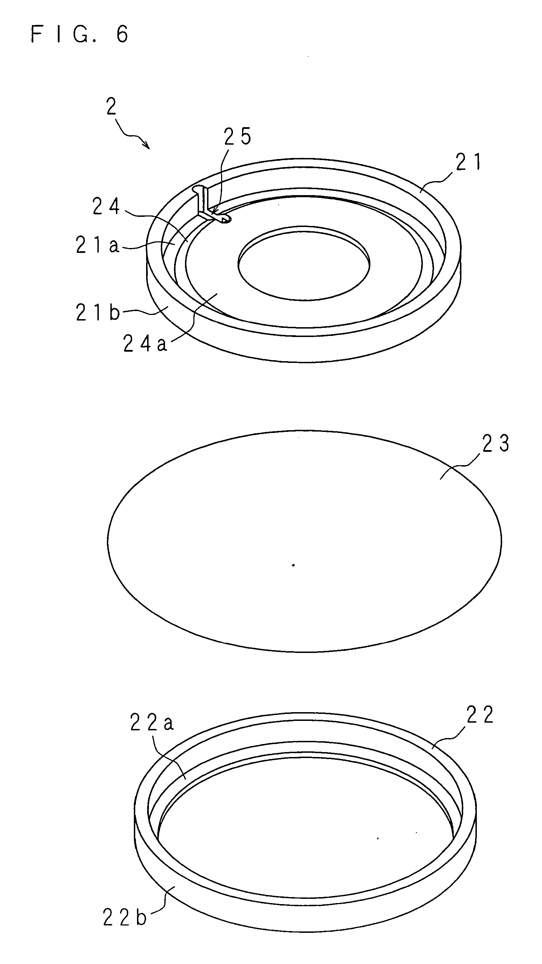

FIG. 4 is a schematic diagram illustrating the structure of the fluorescent X-ray analyzer of the invention. Also, FIG. 5 is an exploded perspective view of the sample cell 5, and FIG. 6 is an exploded perspective view of the cell holder 2. The sample cell 5 includes a cell inner frame 51, a sample cup 52, a cell outer frame 53 and the first X-ray transmission window material 54. The cell inner frame 51 is in a cylindrical shape and is molded from plastics such as polyethylene, a metal or the like. A flange part 51a is provided wholly around the outer circumference of an upper end portion of the cell inner frame 51. Furthermore, a groove part 51b is formed wholly around the outer circumference at the center in the axial direction of the cell inner frame 51, and a ring-shaped projection part 51c is formed wholly around the inner circumference of the cell inner frame 51.

The sample cup 52 is formed by bending a flexible plastic film. The sample cup 52 includes a sample containing part 52a made of a cylinder having a bottom on one end and an opening 52d on the other end; a cylindrical surrounding part 52b connected to the opening 52d of the sample containing part 52a and provided so as to surround the outer circumference of the sample containing part 52a at a prescribed distance from the outer circumference of the sample containing part 52a; and a flange part 52c provided around the outer circumference in an end portion of the surrounding part 52b.

The outer diameter of the sample containing part 52a is smaller than the inner diameter of the cell inner frame 51, and the inner diameter of the surrounding part 52b is substantially equal to the outer diameter of the cell inner frame 51. Furthermore, the height (that is, a vertical length) of the cell inner frame 51 excluding the flange part 51a is slightly smaller than the height of a space sandwiched between the sample containing part 52a and the surrounding part 52b. Therefore, the cell inner frame 51 may be inserted from the upper side into the space sandwiched between the sample containing part 52a and the surrounding part 52b until the flange part 51a of the cell inner frame 51 comes into contact with the flange part 52c of the sample cup 52. When the cell inner frame 51 is thus inserted into the sample cup 52, the cell inner frame 51 is fit in the surrounding part 52b of the sample cup 52, and there arises a gap between the inner circumference of the cell inner frame 51 and the outer circumference of the sample containing part 52a of the sample cup 52.

The first X-ray transmission window material 54 is in the shape of a substantially circular thin sheet having a diameter sufficiently larger than the outer diameter of the sample cup 52 and is made of a material that does not transmit a fluid sample in the form of a liquid or a powder but transmits X-rays. The first X-ray transmission window material 54 is made of an organic material such as polyethylene terephthalate. The first X-ray transmission window material 54 seals the sample cup 52 by covering the opening 52d of the sample cup 52 containing the sample and works as a bottom of the sample cup 52 (namely, a bottom of the sample cell 5).

The cell outer frame 53 is in a cylindrical shape and is molded from plastics such as polyethylene, a metal or the like. The inner diameter of the cell outer frame 53 is slightly larger than the outer diameter of the sample cup 52, and the sample cup 52 in which the cell inner frame 51 has been inserted into a space between the sample containing part 52a and the surrounding part 52b may be inserted to be fit in the cell outer frame 53 from a side of the opening 52d. At this point, the opening 52d of the sample cup 52, covered with the first X-ray transmission window material 54, is fit in the cell outer frame 53, and thus, an outer edge portion of the first X-ray transmission window material 54 is held between the outer circumference of the sample cup 52 and the inner circumference of the cell outer frame 53. Therefore, the first X-ray transmission window material 54 is firmly fixed as the bottom of the sample cell 5 so as to prevent the sample contained in the sample cup 52 from leaking out through the opening 52d.

A flange part 53a is provided wholly around the outer circumference in an upper end portion of the cell outer frame 53, and the flange part 53a supports the cell inner frame 51 and the sample cup 52 fit in the cell outer frame 53 at their flange parts 51a and 52c. Also, a projection part 53b is provided wholly around the inner circumference of the cell outer frame 53 in a position corresponding to the groove part 51b provided on the outer circumference of the cell inner frame 51, and the projection part 53b is engaged with the groove part 51b of the cell inner frame 51 fit in the cell outer frame 53 with the surrounding part 52b of the sample cup 52 and the first X-ray transmission window material 54 sandwiched therebetween. In this manner, the sample cup 52 and the first X-ray transmission window material 54 are firmly held between the cell inner frame 51 and the cell outer frame 53.

In FIGS. 4 and 5 and the above description, the top and the bottom of the sample cell 5 are defined on the basis of the arrangement employed in performing the analysis of a sample with the fluorescent X-ray analyzer, and the sample cell 5 is upside down when the sample cell 5 is assembled and a sample is contained therein. Specifically, the sample cell 5 is assembled and a sample is contained therein by putting the sample cup 52 from above on the cell inner frame 51 with the flange part 51a disposed on the lower side, injecting a sample through the opening 52d into the sample containing part 52a of the sample cup 52, covering the opening 52d of the sample cup 52 with the first X-ray transmission window material 54, and externally fitting the cell outer frame 53 from above. Thereafter, the sample cell 5 is turned upside down and is placed on the cell holder 2 with the first X-ray transmission window material 54 covering the opening 52d of the sample cup 52 set as the bottom.

The cell holder 2 includes a cell holder inner frame 21, a cell holder outer frame 22 and the second X-ray transmission window material 23. The cell holder inner frame 21 is made of a metal such as copper or aluminum and includes a bottom plate 21a in the shape of a disc having an opening 21c at the center (namely, in the shape of a ring). It is noted that the cell holder inner frame 21 is preferably made of copper in order to prevent the influence of the irradiation with the primary X-rays on the measurement accuracy. A cylindrical peripheral part 21b is projected substantially vertically upward in an outer edge portion of the bottom plate 21a, the inner diameter of the peripheral part 21b is larger than the outer diameter of the cylindrical part of the cell outer frame 53 of the sample cell 5, and the height of the peripheral part 21b is sufficiently smaller than the height along the axial direction (i.e., the length along the vertical direction) of the sample cell 5.

Furthermore, the cell holder inner frame 21 includes a supporting part 24 provided in the shape of a ring wholly around the opening 21c in an inner edge portion of the bottom plate 21a (namely, a peripheral portion of the opening 21c) for supporting the lower face of the sample cell 5. The supporting part 24 extends from the inner edge portion of the bottom plate 21a diagonally upward toward the inside of the opening 21c, and a flat and smooth supporting plane 24a in the shape of a ring is formed in an extended end portion (an upper end portion) thereon. The outer diameter of the supporting plane 24a is smaller than the diameter of the opening 52d of the sample cup 52 of the sample cell 5.

In the supporting part 24, the height, the size of the supporting plane 24a and the like are appropriately set so that the first X-ray transmission window material 54 of the sample cell 5 may oppose the opening 21c of the cell holder 2 and that the primary X-rays emitted from the X-ray tube 3 may reach the first X-ray transmission window material 54 through the opening 21c.

Incidentally, it is not always necessary for the supporting part 24 to extend from the inner edge portion of the bottom plate 21a diagonally upward toward the inside of the opening 21c but it may extend from the inner edge portion of the bottom plate 21a vertically upward.

Furthermore, although the supporting part 24 illustrated in the drawings is in the shape of a cylinder reducing in diameter upward, which does not limit the invention. Instead, the supporting part 24 may be provided substantially vertically at the periphery of the opening 21c with the ring-shaped supporting plane 24a provided to extend from an upper end portion of the supporting part 24 toward the axial center. In this case, the outer diameters of the supporting part 24 and the supporting plane 24a are set to be smaller than the diameter of the opening 52d of the sample cell 5.

The second X-ray transmission window material 23 is in the shape of a substantially circular thin sheet with a diameter larger than the outer diameter of the cell holder inner frame 21 and is made of a similar material to the first X-ray transmission window material 54 that does not transmit a fluid sample in the form of a liquid or a powder but transmits X-rays. Since the second X-ray transmission window material 23 covers the opening 21c of the cell holder inner frame 21, the analysis chamber 1a of the fluorescent X-ray analyzer is closed up tight. The cell holder outer frame 22 has a ring-shaped bottom plate 22a. The inner diameter of the bottom plate 22a is larger than the inner diameter of the bottom plate 21a of the cell holder inner frame 21 and is smaller than the outer diameter of the bottom plate 21a. A cylindrical peripheral part 22b to be externally fit on the cell holder inner frame 21 is provided to project substantially vertically upward in an outer edge portion of the bottom plate 22a. The inner diameter of the peripheral part 22b is substantially equal to the outer diameter of the cell holder inner frame 21.

The cell holder inner frame 21 and the cell holder outer frame 22 are fit on each other with the second X-ray transmission window material 23 sandwiched therebetween, and thus, the second X-ray transmission window material 23 is firmly held while covering the opening 21c of the cell holder inner frame 21. Furthermore, when the cell holder inner frame 21 and the cell holder outer frame 22 are fit on each other, the peripheral part 21b of the cell holder inner frame 21 is slightly protruded beyond the peripheral part 22b of the cell holder outer frame 22.

The cell holder 2 assembled by fitting the cell holder inner frame 21 and the cell holder outer frame 22 on each other with the second X-ray transmission window material 23 sandwiched therebetween is removably attached so as to cover the opening portion 1b formed on the top face of the housing 1 of the fluorescent X-ray analyzer. Since the cell holder 2 is thus removably attached on the housing 1, the second X-ray transmission window material 23 may be easily exchanged. Since the cell holder 2 in which the second X-ray transmission window material 23 is held between the cell holder inner frame 21 and the cell holder outer frame 22 is attached on the opening portion 1b of the housing 1, the analysis chamber 1a of the fluorescent X-ray analyzer is closed up tight. Furthermore, the cell holder 2 thus attached is pressed against the housing 1 by a holder presser (corresponding to a fixing section) 13 so as to be firmly fixed, and thereafter, the sample cell 5 containing a sample is placed on the cell holder 2.

The holder presser 13 is in the shape of a ring and is molded from a metal, plastics or the like. The inner diameter of the holder presser 13 is substantially equal to the inner diameter of the peripheral part 21b of the cell holder inner frame 21, and the holder presser 13 is brought into contact with the upper end face of the peripheral part 21b corresponding to the upper end of the cell holder 2 attached on the housing 1, so as to press the cell holder 2 downward. Furthermore, the holder presser 13 is fixed on the housing 1 with a screw 14 while pressing the cell holder 2. Since the cell holder 2 is thus fixed on the housing 1, the cell holder 2 is firmly fixed on the opening portion 1b formed on the housing 1, and hence, the analysis chamber 1a is definitely closed up tight. Moreover, when the displacement gas is introduced into the enclosed analysis chamber 1a, the cell holder 2 may be prevented from removing from the housing 1. Therefore, a distance from the first X-ray transmission window material 54 of the sample cell 5 placed on the cell holder 2 to the X-ray detector 4 may be made substantially constant. Accordingly, when the sample cell 5 is placed on the cell holder 2, there is no need to pay attention to a distance between the lower face of the sample cell 5 and the X-ray detector 4.

Furthermore, the injection tube 15 described later may be fixed on the holder presser 13. Incidentally, the holder presser 13 is not limited to the structure in which it is removably screwed on the housing 1 as illustrated in the drawing. Instead, the holder presser 13 may be pivotably attached on the housing 1 with a hinge mechanism or the like provided on one side of the holder presser 13 and with the other side fixed with the screw 14. Moreover, the fixing of the holder presser 13 on the housing 1 is not limited to that with the screw 14 but a clamping metal such as a snap fastener may be used for the fixing. The holder presser 13 is preferably easily removable from the housing 1.

The sample cell 5 is placed on the supporting part 24 of the cell holder 2, and in the fluorescent X-ray analyzer of this invention, the outer diameter of the supporting plane 24a of the supporting part 24 is smaller than the diameter of the opening 52d of the sample cell 5. Therefore, the supporting plane 24a supports the sample cell 5 by coming into contact with the first X-ray transmission window material 54 covering the opening 52d inside the edge portion of the opening 52d of the sample cell 5. Since the contact between the sample cell 5 and the supporting part 24 is thus attained by using the ring-shaped supporting plane 24a, the sample cell 5 and the supporting part 24 are in contact with each other over a large area, and the supporting plane 24a may be brought into close contact with the first X-ray transmission window material 54 of the sample cell 5, so as to stably support the sample cell 5.

Furthermore, the supporting part 24 of the cell holder 2 is extended in a sufficient height so that the lower end of the cell outer frame 53 of the sample cell 5 may not be brought into contact with the upper face of the bottom plate 21a of the cell holder inner frame 21. Therefore, the contact between the cell holder 2 and the sample cell 5 is attained merely between the supporting plane 24a of the supporting part 24 and the lower face of the first X-ray transmission window material 54 covering the opening 52d and they are never in contact with each other in another portion. Moreover, a contact portion of the first X-ray transmission window material 54 in contact with the supporting plane 24a of the cell holder 2 is merely a portion where the sample is present thereon, and the first X-ray transmission window material 54 is not in contact with the supporting plane 24a in a portion where the lower end of the sample cup 52 is present thereon.

Accordingly, even when bending or the like is caused in the first X-ray transmission window material 54, the position of the first X-ray transmission window material 54 relative to the position of the supporting part 24 of the cell holder 2 is minimally changed. Furthermore, even when the position of another portion of the sample cell 5 such as the cell inner frame 51 or the cell outer frame 53 relative to the position of the supporting part 24 is changed due to a problem caused in assembling the sample cell 5, the sample cell 5 is never brought into contact with the cell holder inner frame 21, and hence, the position of the first X-ray transmission window material 54 relative to the position of the supporting part 24 of the cell holder 2 is never changed. Therefore, even when the first X-ray transmission window material 54 is bent or a problem occurs in assembling the sample cell 5, the position of the first X-ray transmission window material 54 (namely, the position of the sample contained in the sample cell 5) and the position of the X-ray detector 4 are never changed, and hence, the fluorescent X-rays may be accurately detected by the X-ray detector 4.

It is noted that the fluorescent X-ray analyzer of the invention is not limited to the structure in which the contact between the supporting plane 24a of the cell holder 2 and the first X-ray transmission window material 54 of the sample cell 5 is attained merely in the portion where the sample is present thereon. Specifically, the contact portion between the supporting plane 24a of the cell holder 2 and the first X-ray transmission window material 54 of the sample cell 5 may include a portion where the lower end of the sample cup 52 is present thereon.

When the sample cell 5 is placed on the cell holder 2, the supporting plane 24a of the supporting part 24 of the cell holder 2 is brought into close contact with the first X-ray transmission window material 54 of the sample cell 5, and thus, a substantially enclosed space (corresponding to the second closed space) in the shape of a substantially circular truncated cone surrounded by the first X-ray transmission window material 54 of the sample cell 5 and the supporting part 24 and the second X-ray transmission window material 23 of the cell holder 2 is formed. In the fluorescent X-ray analyzer of this invention, the air inside this substantially enclosed space (corresponding to the window material space 20) is replaced with the displacement gas in the same manner as for the air inside the analysis chamber 1a before irradiating and detecting the X-rays, so as to improve the analysis accuracy. Therefore, the cell holder inner frame 21 of the cell holder 2 is provided with an injection hole (a through hole) 25 through which the displacement gas is injected into the window material space 20.

FIGS. 7A and 7B are schematic diagrams explaining a method for injecting the displacement gas and are enlarged side cross-sectional views of the supporting part 24 of the cell holder 2 and its vicinity. Furthermore, FIG. 7A illustrates a cross-section of the supporting part 24 taken in a position where the injection hole 25 is not formed and FIG. 7B illustrates a cross-section of the supporting part 24 taken in a position where the injection hole 25 is formed.

The injection hole 25 is an elliptical through hole extending along the radial direction of the cell holder inner frame 21 in a view taken on the top face of the cell holder inner frame 21, and is formed to vertically penetrate the cell holder inner frame 21 and to penetrate an inclined portion of the supporting part 24 from one side to the other side. In other words, one end of the injection hole 25 reaches the center of the peripheral part 21b and the other end of the injection hole 25 reaches the outer edge portion of the supporting plane 24a of the supporting part 24. Thus, the window material space 20 surrounded by the first X-ray transmission window material 54, the supporting part 24 and the second X-ray transmission window material 23 is communicated with the outside through the injection hole 25 alone, so that the displacement gas may be injected through the injection hole 25. It is noted that the injection hole 25 is not limited by this shape as far as the window material space 20 may be communicated with the outside through the injection hole 25.

The fluorescent X-ray analyzer is equipped with the injection tube 15 for injecting the displacement gas into the window material space 20 through the injection hole 25. The injection tube 15 is a linear thin tube molded from a metal, plastics or the like, and an end portion of the injection tube 15 is bent into a substantially L-shape. A linear portion at the tip of the injection tube 15 (a first portion 15a) has a length slightly smaller than the length of the injection hole 25 in the view taken on the top face and the injection tube 15 is provided with the first portion 15a inserted substantially horizontally into the injection hole 25 from the upper side of the cell holder 2, so as to have an air outlet at the tip of the first portion 15a facing the inside of the window material space 20. Furthermore, a second portion 15b connected substantially vertically to the first portion 15a of the injection tube 15 is disposed substantially vertically along the peripheral part 21b of the cell holder inner frame 21 when the first portion 15a is inserted into the injection hole 25.

Since the injection tube 15 inserted into the injection hole 25 formed in the cell holder inner frame 21 is attached to be pressed by the sample cell 5 as illustrated in FIG. 7B, the air outlet at the tip of the first portion 15a is disposed in substantially the same position. Therefore, no matter how the injection tube 15 is attached, the air inside the window material space 20 may be efficiently discharged by the displacement gas injected through the injection tube 15. Although the first portion 15a of the injection tube 15 has a length sufficient for having the tip thereof within the window material space 20 as illustrated in FIG. 7B, the first portion 15a may have a length not reaching the window material space 20 as far as the air outlet at the tip faces the window material space 20.

For example, the first portion 15a of the injection tube 15 may have a length having the tip thereof reaching a position directly below the cell outer frame 53 of the sample cell 5. When the injection tube 15 having such a length is used, the displacement gas is injected toward the window material space 20 from the air outlet disposed in the position directly below the cell outer frame 53. Also, the displacement gas thus injected may be guided by the injection hole 25 of the cell holder inner frame 21 so as to reach the window material space 20, and therefore, the air inside the window material space 20 may be replaced with the displacement gas in the same manner as in the case where the injection tube 15 with the length sufficient for having the tip of the first portion 15a reaching the window material space 20 is used.

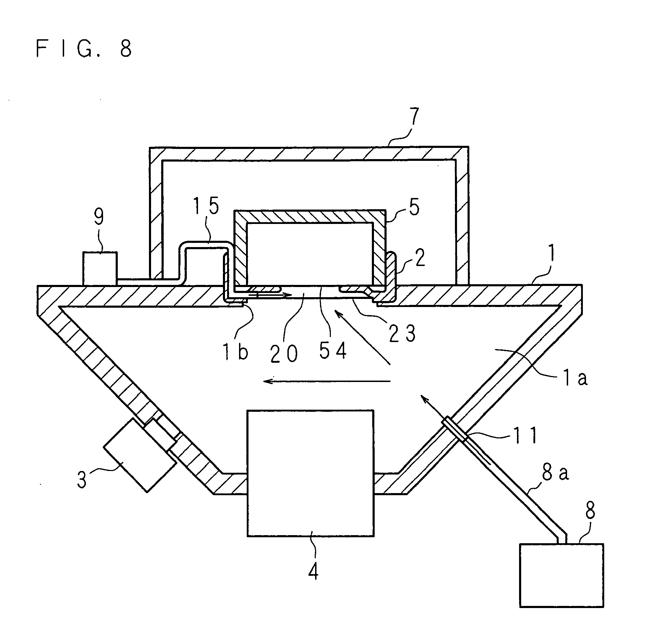

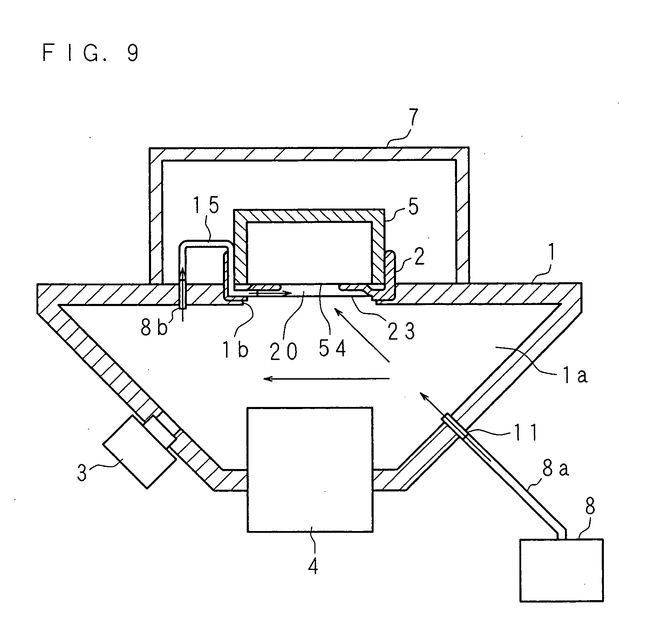

Moreover, the opposite end of the injection tube 15 is connected to a gas supplying device 9 (see FIG. 8) or a connection port 8b (see FIG. 9) through an electromagnetic valve or the like, which will be described in detail later. Before staring the analysis with the X-rays, the displacement gas supplied from the gas supplying device 9 or through the connection port 8b is injected into the window material space 20 through the injection tube 15 so as to discharge the air inside the window material space 20 to the outside. Although not illustrated in the drawings, the injection tube 15 may be inserted into a notch or a through hole formed on the holder presser 13 so as to have the opposite end outside the window material space 20. Furthermore, as far as the holder presser 13 employs a configuration for pressing the injection tube 15 together with the cell holder inner frame 21 against the housing 1, the injection tube 15 may be attached with the air outlet at the tip of the first portion 15a definitely disposed in substantially the same position.

The injection tube 15 is inserted into the injection hole 25 of the cell holder 2 after attaching the cell holder 2 to the housing 1 and before placing the sample cell 5 on the cell holder 2. Incidentally, the injection tube 15 is attached on the holder presser 13 for pressing the cell holder 2 against the housing 1, and when the holder presser 13 is fixed with the screw on the housing 1, the injection tube 15 is inserted into the injection hole 25 of the cell holder 2. Although not illustrated in the drawings, the end portion of the injection tube 15 may be inserted from the outside to the inside (from the upper side to the lower side) through the opening of the holder presser 13, or a notch, a through hole or the like for inserting the injection tube 15 may be formed on the holder presser 13.

An operator performing the analysis of a sample with the fluorescent X-ray analyzer may start the analysis of the sample after assembling the cell holder 2 and attaching the assembled cell holder 2 on the housing 1 and fixing it with the holder presser 13, inserting the injection tube 15 into the injection hole 25 of the cell holder 2, placing the sample cell 5 containing the sample on the cell holder 2, and covering the sample cell 5, the cell holder 2 and the like with the cover 7. In the fluorescent X-ray analyzer, a gas such as a helium gas is injected through the injection port 11 into the analysis chamber 1a within the housing 1 as well as a gas such as a helium gas is injected through the injection hole 25 from the injection tube 15 into the window material space 20 surrounded by the first X-ray transmission window material 54, the supporting part 24 and the second X-ray transmission window material 23. After sufficiently filling the spaces with the gas in the fluorescent X-ray analyzer, the bottom of the sample cell 5 is irradiated with primary X-rays emitted from the X-ray tube 3, fluorescent X-rays generated from the sample contained in the sample cell 5 through this irradiation are detected by the X-ray detector 4, and the sample may be analyzed by examining a spectral distribution of the detected fluorescent X-rays.

Next, a configuration for discharging the air inside the analysis chamber 1a and the window material space 20 to the outside and filling the displacement gas instead of the discharged air (i.e., supplying means) employed in the fluorescent X-ray analyzer having the aforementioned structure will be described. FIGS. 8 and 9 are schematic diagrams illustrating mechanisms for supplying the displacement gas into the analysis chamber 1a and the window material space 20. It is noted that FIG. 8 illustrates a configuration using two gas supplying devices 8 and 9 and that FIG. 9 illustrates a configuration using one gas supplying device 8. Each of the gas supplying devices 8 and 9 includes a gas cylinder filled with the displacement gas such as a helium gas or a nitrogen gas, a regulator for adjusting the amount of displacement gas injected from the gas cylinder, and the like.

In the configuration illustrated in FIG. 8, the gas supplying device 8 is connected to the injection port 11 provided on the housing 1 through an injection tube 8a. The gas supplying device 9 is connected to the opposite end of the injection tube 15 illustrated in FIG. 7B. It is noted that a notch for allowing the injection tube 15 to extend outside the cover 7 is provided in an appropriate position in an edge of the opening of the cover 7 as illustrated in FIG. 8.

Each of the gas supplying devices 8 and 9 injects the displacement gas at a flow rate of approximately 1 liter/min. for approximately 5 seconds after the fluorescent X-ray analyzer starting supply processing of the displacement gas and injects the displacement gas at a flow rate of approximately 0.1 through 0.3 liter/min. after 5 seconds have elapsed from the start of the supply processing until the end of the analysis with the fluorescent X-ray analyzer. In this manner, the replacement processing with the displacement gas is performed at a high flow rate for a prescribed time after the start of the supply of the displacement gas and the flow rate is reduced thereafter, and thus, the amount of displacement gas necessary for the replacement processing may be reduced. It is noted that the fluorescent X-ray analyzer includes a sensor for detecting, for example, the placement of the sample cell 5 on the cell holder 2, and when the placement of the sample cell 5 is detected by the sensor, the supply processing is started.

The displacement gas injected by the gas supplying device 8 is injected into the analysis chamber 1a through the injection tube 8a and the injection port 11, and the displacement gas injected by the gas supplying device 9 is injected into the window material space 20 through the injection tube 15. It is noted that the housing 1 is provided with an exhaust port in an appropriate position for efficiently discharging the air to the outside from the analysis chamber 1a by the displacement gas injected through the injection port 11. Also, the exhaust port is provided with a tube with a given length or a reserve tank so as to prevent backflow of the outside air into the analysis chamber 1a.

Incidentally, since the cell holder 2 and the sample cell 5 are not in completely close contact with each other, the air discharged from the window material space 20 by the displacement gas injected through the injection tube 15 is leaked through a contact portion between the cell holder 2 and the sample cell 5. Therefore, there is no need to provide the window material space 20 with an exhaust port for discharging the air to the outside. When the two gas supplying devices 8 and 9 are used as illustrated in FIG. 8, the air inside the analysis chamber 1a and the window material space 20 may be efficiently replaced with the displacement gas.

On the other hand, in the configuration illustrated in FIG. 9, the connection port 8b connecting the analysis chamber 1a with the sample chamber is provided in an appropriate position in an area on the top face of the housing 1 covered with the cover 7. It is noted that the connection port 8b is provided in a position for efficiently discharging the air inside the analysis chamber 1a by the displacement gas injected through the injection port 11. Furthermore, the opening of the connection port 8b on the side of the sample chamber is connected to the injection tube 15 attached on the cell holder 2. Also in the configuration illustrated in FIG. 9, the gas supplying device 8 is connected to the injection port 11 provided on the housing 1 of the fluorescent X-ray analyzer through the injection tube 8a.

The displacement gas injected from the gas supplying device 8 is injected into the analysis chamber 1a through the injection tube 8a and the injection port 11, and a gas (including the air and the displacement gas) discharged from the analysis chamber 1a is injected into the window material space 20 through the connection port 8b and the injection tube 15. Incidentally, in the configuration illustrated in FIG. 9, the gas discharged from the analysis chamber 1a is discharged through the connection port 8b, and therefore, there is no need to provide an exhaust port for discharging the air inside the analysis chamber 1a to the outside. Owing to this configuration, even when merely one gas supplying device 8 is used, the air inside the analysis chamber 1a and the window material space 20 may be efficiently replaced with the displacement gas.

It is noted that the gas in the same amount as the displacement gas injected by the gas supplying device 8 is injected through the connection port 8b and the injection tube 15 into the window material space 20 because the analysis chamber 1a is closed up tight. Accordingly, the displacement gas may be supplied to the analysis chamber 1a and the window material space 20 in the same manner as in the case where the two gas supplying devices 8 and 9 are used. In the case where merely one gas supplying device 8 is used, since the air inside the analysis chamber 1a is first moved to the window material space 20 and is thereafter discharged from the window material space 20, time necessary for completing sufficient replacement processing is longer than in the case where the two gas supplying devices 8 and 9 are used.

In the fluorescent X-ray analyzer having the aforementioned structure, the air inside the analysis chamber 1a and the window material space 20 may be efficiently replaced with the displacement gas, and hence, the fluorescent X-rays generated from a light element may be accurately detected. Furthermore, although the whole air inside the analysis chamber and the sample chamber should be replaced with the displacement gas in the conventional fluorescent X-ray analyzer of FIG. 1, merely the air inside the analysis chamber 1a and the window material space 20 is replaced in the above-described fluorescent X-ray analyzer. Therefore, the amount of displacement gas necessary for the supply processing may be reduced as well as the time necessary for the supply processing may be reduced, resulting in attaining efficient supply processing.

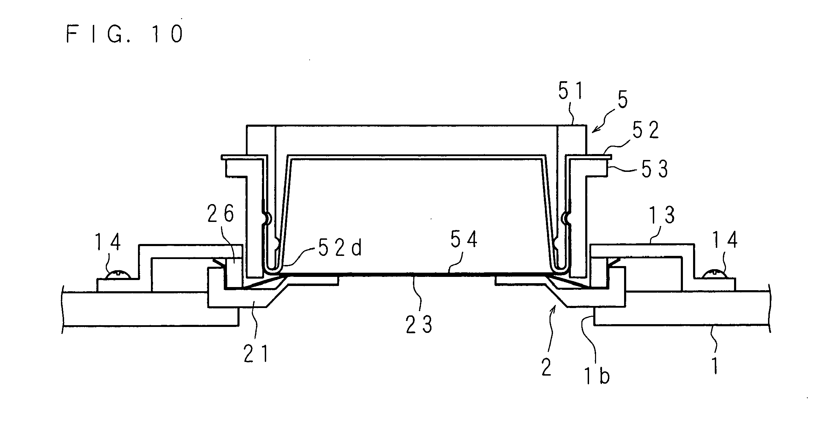

In the cell holder 2 of the above-described embodiment, the second X-ray transmission window material 23 is held between the cell holder inner frame 21 and the cell holder outer frame 22, and hence, the window material space 20 is formed. Apart from this structure, a structure as illustrated in FIG. 10 may be employed.

FIG. 10 is a schematic diagram illustrating another structure of the cell holder 2.

FIG. 10 illustrates a modification of the cell holder 2 of FIG. 4.
The cell holder 2 illustrated in FIG. 10 does not include the cell holder outer frame 22 but includes the cell holder inner frame 21 and a ring-shaped fixing part 26 having an outer diameter substantially equal to the diameter of the inner circumference of the peripheral part 21b of the cell holder inner frame 21. The second X-ray transmission window material 23 is placed on the top face of the cell holder inner frame 21, and the fixing part 26 is fit in the cell holder inner frame 21 from above, so that the second X-ray transmission window material 23 may be held between the cell holder inner frame 21 and the fixing part 26. Furthermore, since the inner diameter of the fixing part 26 is slightly larger than the outer diameter of the sample cell 5, the sample cell 5 may be placed on the cell holder 2 assembled by fitting the fixing part 26 in the cell holder inner frame 21.

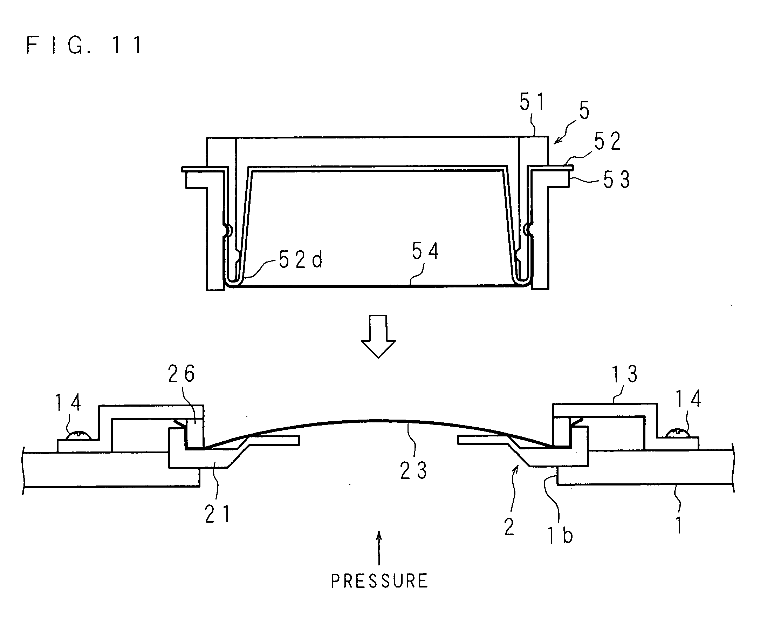

Incidentally, in the case where the cell holder 2 having the structure illustrated in FIG. 10 is used, it is necessary to place the sample cell 5 on the cell holder 2 so as not to allow the outside air to remain between the second X-ray transmission window material 23 and the first X-ray transmission window material 54. FIG. 11 is a schematic diagram explaining processing to be performed for placing the sample cell 5 on the cell holder 2. As illustrated in FIG. 11, in placing the sample cell 5 on the cell holder 2, the pressure within the analysis chamber 1a disposed below the cell holder 2 is increased, and thus, the second X-ray transmission window material 23 is inflated so as to have the center portion thereof elevated. Under this condition, the sample cell 5 is placed from above on the second X-ray transmission window material 23. In this manner, the outside air present between the second X-ray transmission window material 23 and the first X-ray transmission window material 54 may be efficiently excluded, and no outside air remains between the X-ray transmission window materials 23 and 54, so as to prevent the analysis accuracy from degrading due to presence of the outside air.

As described above, in the fluorescent X-ray analyzer of this embodiment, the space where the air is to be replaced with the displacement gas may be smaller than in the conventional fluorescent X-ray analyzer of FIG. 1. Therefore, the necessary amount of displacement gas may be reduced, and hence, the cost of the analysis using fluorescent X-rays may be reduced. Furthermore, since the amount of air to be replaced with the displacement gas is reduced, the time necessary for the supply processing of the displacement gas (i.e., replacement processing with the displacement gas) may be reduced, resulting in reducing the time necessary for the analysis.

### (EMBODIMENT 2)

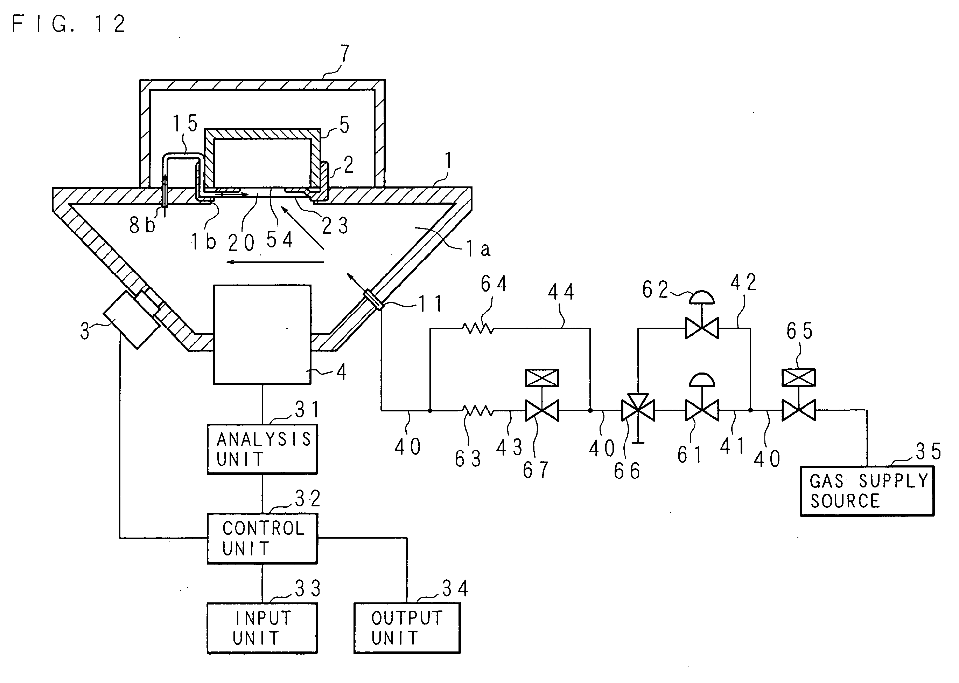

Embodiment 2 of the invention will now be described. FIG. 12 is a schematic diagram illustrating the structure of a fluorescent X-ray analyzer according to Embodiment 2. In FIG. 12, like reference numerals are used to refer to like elements used in FIGS. 3 and 9. The fluorescent X-ray analyzer of Embodiment 2 illustrated in FIG. 12 employs a configuration where the air inside an analysis chamber 1a and a window material space 20 may be replaced with any of two kinds of gases (i.e., a helium gas and a nitrogen gas). A displacement gas is injected into the analysis chamber 1a through an injection port 11, so as to replace the air inside the analysis chamber 1a with the displacement gas. Also, the displacement gas inside the analysis chamber 1a is injected into the window material space 20 through a connection port 8b and an injection tube 15, so as to replace the air inside the window material space 20 with the displacement gas.

The injection port 11 is connected to a tube 40 linked to a gas supply source 35 for a helium gas or a nitrogen gas. The gas supply source 35 is a gas cylinder, a gas generator, a gas supply pipe or the like. The helium gas or the nitrogen gas is supplied through the tube 40 into the analysis chamber 1a. In the middle of the tube 40, an on-off valve 65 is provided, and the on-off valve 65 is opened/closed for starting/stopping the supply of the gas from the gas supply source 35. On the downstream side of the on-off valve 65, the tube 40 branches into a branch tube 41 and a branch tube 42. In the middle of the branch tube 41, a helium pressure adjustor 61 is provided, and in the middle of the branch tube 42, a nitrogen pressure adjustor 62 is provided.

The branch tube 41 is a tube for allowing the helium gas to pass therethrough when the helium gas is used as the displacement gas, and the branch tube 42 is a tube for allowing the nitrogen gas to pass therethrough when the nitrogen gas is used as the displacement gas. The helium pressure adjustor 61 is set to adjust the pressure of the helium gas to a specific pressure precedently determined for the helium gas, and the nitrogen pressure adjustor 62 is set to adjust the pressure of the nitrogen gas to a specific pressure precedently determined for the nitrogen gas. Specifically, the helium pressure adjustor 61 and the nitrogen pressure adjustor 62 are set so that the flow rates per unit time of the helium gas and the nitrogen gas to be supplied to the analysis chamber 1a and the window material space 20 may be the same. Since the nitrogen gas has higher viscosity than the helium gas, in order to equalize the flow rates per unit time of the helium gas and the nitrogen gas, it is necessary to set the pressure of the nitrogen gas to be higher. For example, the helium pressure adjustor 61 adjusts the pressure to 20 kPa and the nitrogen pressure adjustor 62 adjusts the pressure to 80 kPa.

The branch tube 41 and the branch tube 42 join with each other through a selector valve 66. The selector valve 66 has a function to close one of the branch tubes 41 and 42 and to open the other and is capable of selecting either of the branch tube 41 and the branch tube 42 to be opened. When the helium gas is used as the displacement gas, the selector valve (corresponding to path switching means) 66 opens the branch tube 41 and closes the branch tube 42, and when the nitrogen gas is used as the displacement gas, the selector valve 66 opens the branch tube 42 and closes the branch tube 41.

Furthermore, at the downstream side of the selector valve 66, the tube 40 branches into a branch tube 43 and a branch tube 44. In the middle of the branch tube 43, a flow adjusting on-off valve (corresponding to flow rate adjusting means) 67 and a high flow rate capillary 63 are provided, and in the middle of the branch tube 44, a low flow rate capillary 64 is provided. Each of the high flow rate capillary 63 and the low flow rate capillary 64 is a tube having a dimension and a shape adjusted for allowing a gas with a given pressure to pass therethrough at a given flow rate per unit time and is used for defining the flow rate per unit time of the gas passing through each of the branch tube 43 and the branch tube 44. The high flow rate capillary 63 is formed so as to allow the gas to flow therethrough at a higher flow rate per unit time than in the low flow rate capillary 64. Therefore, the flow rate of the gas passing through the branch tube 43 is higher than that passing through the branch tube 44. In each of the helium pressure adjustor 61 and the nitrogen pressure adjustor 62, the pressure of the gas is precedently set in accordance with the dimensions and the shapes of the high flow rate capillary 63 and the low flow rate capillary 64 so that the flow rate per unit time of the gas passing through the high flow rate capillary 63 and that passing through the low flow rate capillary 64 may be the same no matter which of the helium gas and the nitrogen gas is used. For example, the high flow rate capillary 63 is formed so as to attain a flow rate per unit time of the gas of 0.9 liter/min., and the low flow rate capillary 64 is formed so as to attain a flow rate per unit time of the gas of 0.1 liter/min. Actually, the pressures set by the helium pressure adjustor 61 and the nitrogen pressure adjustor 62 are controlled so that the flow rates per unit time attained by the high flow rate capillary 63 and the low flow rate capillary 64 may be set to specific values.

The flow adjusting on-off valve 67 is opened/closed for opening/closing the branch tube 43. The branch tube 43 and the branch tube 44 join with each other, and the tube 40 after joining the branch tubes 43 and 44 is connected to the injection port 11. When the flow adjusting on-off valve 67 opens the branch tube 43, the gas passes through both the branch tube 43 and the branch tube 44 to be supplied into the analysis chamber 1a through the injection port 11. In this case, the flow rate per unit time of the gas supplied to the analysis chamber 1a is a sum of the flow rates per unit time defined by the high flow rate capillary 63 and the low flow rate capillary 64. When the flow adjusting on-off valve 67 closes the branch tube 43, the gas passes through the branch tube 44 alone to be supplied into the analysis chamber 1a. In this case, the flow rate per unit time of the gas supplied to the analysis chamber 1a corresponds to the flow rate per unit time defined by the low flow rate capillary 64, which is lower than the flow rate attained when the flow adjusting on-off valve 67 opens the branch tube 43. In this manner, the flow adjusting on-off valve 67 is opened/closed so that the flow rate per unit time of the gas may be adjusted to one of the two flow rates.

Each of the on-off valve 65, the selector valve 66 and the flow adjusting on-off valve 67 is an electromagnetic valve, whose operation is controlled by a control unit 32. Furthermore, the tube 40 is appropriately provided with a relief valve, a flow meter and a pressure gage not shown.

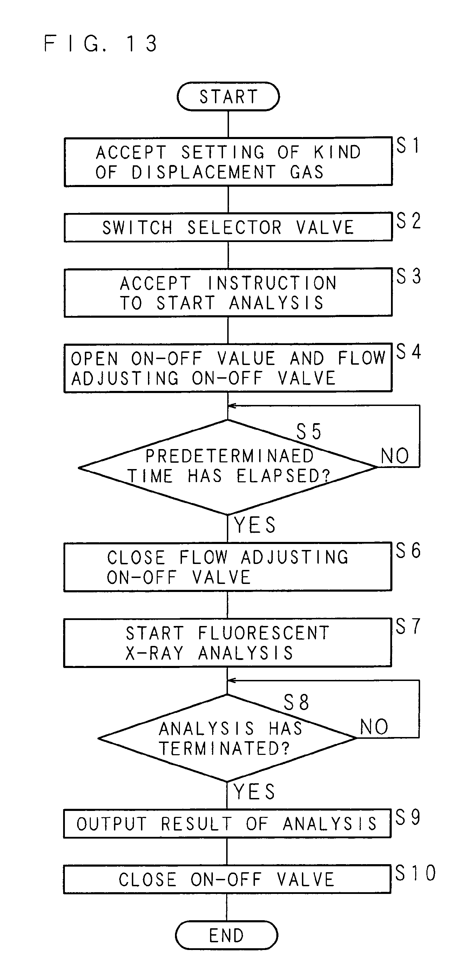

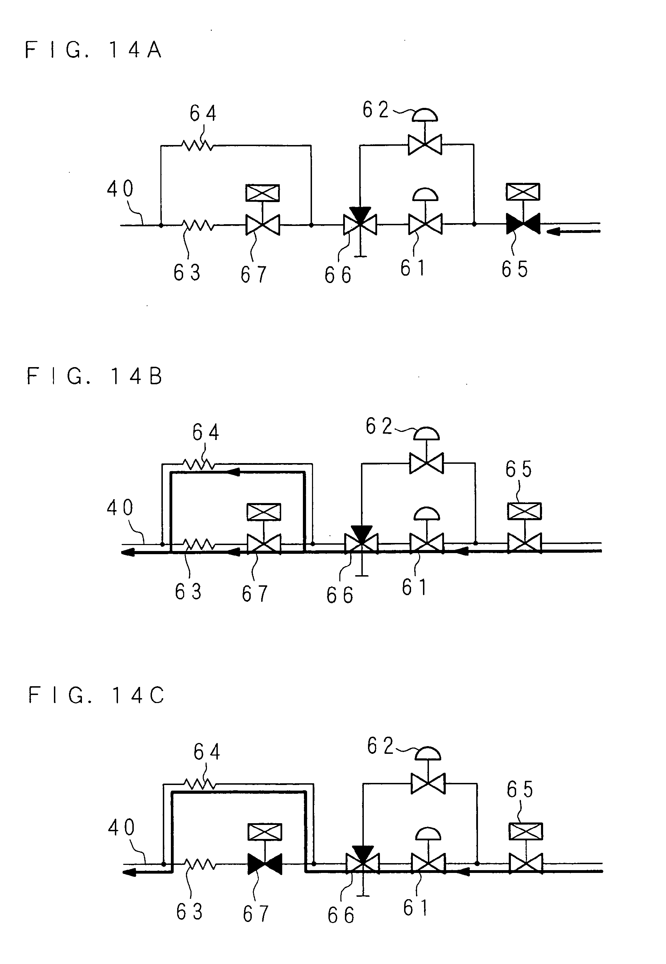

Next, a fluorescent X-ray analysis method using the fluorescent X-ray analyzer having the aforementioned structure will be described. FIG. 13 is a flowchart illustrating procedures in the fluorescent X-ray analysis method of the invention. FIGS. 14A through 14C are schematic diagrams illustrating a flow of a helium gas during the fluorescent X-ray analysis, in which the flow of the gas is illustrated with thick arrows.

In the fluorescent X-ray analyzer in which the sample cell 5 is placed on the cell holder 2 and the cover 7 is closed, a user operates the input unit 33 so that the fluorescent X-ray analyzer accepts, by the input unit 33, setting of the kind of displacement gas to be replaced with the air inside the analysis chamber 1a and the window material space 20 (S1). Next, in accordance with the accepted setting of the kind of gas, the control unit 32 switches the selector valve 66 so as to open the branch tube provided with the pressure adjustor corresponding to the kind of gas (S2). For example, a helium gas is accepted as the setting of the kind of gas, and the control unit 32 switches the selector valve 66 so as to open the branch tube 41 and close the branch tube 42. FIG. 14A illustrates the state attained in step S2 assuming that the helium gas is used. The selector valve 66 opens the branch tube 41 and closes the branch tube 42, and at this stage, the on-off valve 65 is closed. It is noted that the procedures in steps S1 and S2 may be omitted when the selector valve 66 has been already switched in accordance with the kind of gas.

Next, the fluorescent X-ray analyzer accepts an instruction to start the analysis by the user's operation of the input unit 33 (S3) and the control unit 32 opens the on-off valve 65 and the flow adjusting on-off valve 67 (S4). It is noted that the flow adjusting on-off valve 67 may be precedently opened before starting the analysis. FIG. 14B illustrates the state attained after the procedure of step S4 is executed. Since the on-off valve 65 is opened, the helium gas is supplied from the gas supply source 35 through the tube 40 to the analysis chamber 1a. Since the branch tube 42 is closed and the branch tube 41 is opened by the selector valve 66, the helium gas passes through the branch tube 41. In passing the branch tube 41, the pressure of the helium gas is adjusted to a pressure precedently set by the helium pressure adjustor 61. Also, since the flow adjusting on-off valve 67 is opened, the helium gas passes through both the branch tube 43 and the branch tube 44. Since the helium gas passes through both the high flow rate capillary 63 and the low flow rate capillary 64, the helium gas is supplied to the analysis chamber 1a at a flow rate per unit time obtained by summing the flow rates defined by the high flow rate capillary 63 and the low flow rate capillary 64. The helium gas is thus supplied to the analysis chamber 1a and further to the window material space 20 at a high flow rate, and therefore, the air inside the analysis chamber 1a and the window material space 20 is rapidly replaced with the helium gas, so as to attain a helium gas atmosphere in the analysis chamber 1a and the window material space 20.

The control unit 32 determines whether or not a precedently set predetermined time of, for example, 5 seconds has elapsed after opening the on-off valve 65 (S5). When the predetermined time has not elapsed (NO in S5), the control unit 32 continues to make the determination. When the predetermined time has elapsed after opening the on-off valve 65 (YES in S5), the control unit 32 closes the flow adjusting on-off valve 67 (S6). FIG. 14C illustrates the state attained after the procedure of step S6 is executed. Since the flow adjusting on-off valve 67 is closed, the helium gas cannot pass through the branch tube 43 and is supplied to the analysis chamber 1a through the branch tube 44. Since the helium gas passes through the low flow rate capillary 64 alone out of the high flow rate capillary 63 and the low flow rate capillary 64, the helium gas is supplied to the analysis chamber 1a at a low flow rate per unit time defined by the low flow rate capillary 64.

After adjusting the flow rate per unit time of the gas to be low by closing the flow adjusting on-off valve 67 in step S6, the control unit 32 starts the fluorescent X-ray analysis by starting detection of fluorescent X-rays with an X-ray detector 4 and analysis with an analysis unit 31 (S7). In the helium gas atmosphere, an X-ray tube 3 irradiates a sample with primary X-rays, and the X-ray detector 4 detects fluorescent X-rays generated from the sample. Also, the analysis unit 31 analyzes the result of the detection. Next, the control unit 32 accepts an instruction to terminate the analysis through the input unit 33 by an operation performed by the user or waits for timing for terminating the fluorescent X-ray analysis based on, for example, lapse of analysis time precedently set (S8). When the terminating timing has not come (NO in S8), the control unit 32 continues the fluorescent X-ray analysis. When the terminating timing has come (YES in S8), the control unit 32 makes an output unit 34 output the result of the analysis such as spectra of the detected fluorescent X-rays (S9), closes the on-off valve 65 (S10) and terminates the fluorescent X-ray analysis.

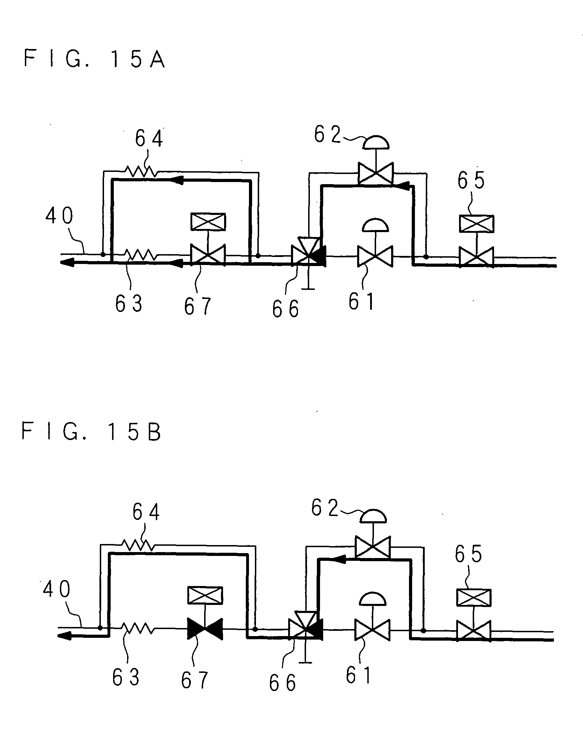

Although the helium gas is used as the displacement gas in the exemplary case illustrated in FIGS. 14A through 14C, the fluorescent X-ray analysis may be executed in the same manner also when a nitrogen gas is used. FIGS. 15A and 15B are schematic diagrams illustrating a flow of the nitrogen gas in the fluorescent X-ray analysis using the nitrogen gas. When the nitrogen gas is used as the displacement gas, the input unit 33 accepts setting of the nitrogen gas as the kind of gas in step S 1, and the control unit 32 switches the selector valve 66 so as to open the branch tube 42 and close the branch tube 41 in step S2. FIG. 15A illustrates the state attained after the procedure of step S4 is executed, and FIG. 15B illustrates the state attained after the procedure of step S6 is executed. The nitrogen gas passes through the branch tube 42 and is adjusted to a precedently set pressure by the nitrogen pressure adjustor 62 to be supplied to the analysis chamber 1a.

In the fluorescent X-ray analyzer described in detail so far, a plurality of pressure adjustors are provided in parallel in the middle of the tube 40 for supplying the displacement gas to the analysis chamber 1a and the window material space 20, each of the pressure adjustors adjusts the pressure of the gas in accordance with the kind of gas, and a path of the gas, namely, which of the pressure adjustors is to be passed, may be switched. Since the pressure adjustor through which the gas passes is thus switched in accordance with the kind of gas, the gas may be supplied to the analysis chamber 1a and the window material space 20 at a pressure in accordance with the kind of gas, and therefore, any of plural kinds of gases different from one another in pressure necessary for supply because of their different viscosities may be supplied to the analysis chamber 1a and the window material space 20 through the same tube. Accordingly, the plural gases may be alternatively used as the displacement gas for the analysis chamber 1a and the window material space 20, and as a result, the plural gases may be alternatively used in accordance with a sample to be analyzed or required accuracy. Furthermore, since the plural pressure adjusters are provided in parallel, plural kinds of gases may be alternatively used with a simple structure. No matter which of the plural kinds of gases is used, most of portions of the tube 40 excluding the pressure adjustors may be commonly used, and hence, the configuration to be employed for using the plural kinds of gases is minimized, so as to minimize increase of the cost of the fluorescent X-ray analyzer. Moreover, in each of the pressure adjustors, the pressure is set in accordance with the dimension and the shape of a corresponding tube and the kind of gas so that the flow rate per unit time of the gas to be supplied to the analysis chamber 1a and the window material space 20 may be constant regardless of the kind of gas. Therefore, regardless of the kind of gas to be used, the gas is supplied to the analysis chamber 1a and the window material space 20 at the same flow rate per unit time. Even when the kind of displacement gas is changed, the flow rate of the gas is not changed, and hence, the fluorescent X-ray analysis may be executed stably no matter which of the gases is used.

Moreover, the tube 40 branches into the branch tube 43 having the high flow rate capillary 63 and the branch tube 44 having the low flow rate capillary 64 and the branch tubes are ultimately joined with each other to be connected to the injection port 11. In the fluorescent X-ray analyzer, the branch tube 43 is opened/closed by using the flow adjusting on-off valve 67, so that the flow rate per unit time of the gas to be supplied to the analysis chamber 1a and the window material space 20 may be adjusted by two stages, and when the fluorescent X-ray analysis is to be executed, the gas is first supplied to the analysis chamber 1a at a high flow rate, and the flow rate of the gas is adjusted to be low before starting the fluorescent X-ray analysis. Since the gas is first supplied to the analysis chamber 1a and the window material space 20 at a high flow rate, the air inside the analysis chamber 1a and the window material space 20 is rapidly and definitely replaced with the gas, and hence, the accuracy of the fluorescent X-ray analysis particularly for a light element is improved. After the air inside the analysis chamber 1a and the window material space 20 is replaced with the gas once, even if the flow rate per unit time of the gas is reduced, the gas atmosphere may be retained. Therefore, after adjusting the flow rate of the gas to be low, the fluorescent X-ray analysis is started, and since the fluorescent X-ray analysis is executed while supplying the gas at a low flow rate to the analysis chamber 1a and the window material space 20, the amount of displacement gas to be consumed may be suppressed while retaining the accuracy of the fluorescent X-ray analysis.

The gas passing through the high flow rate capillary 63 and the low flow rate capillary 64 is supplied in supplying the gas at a high flow rate to the analysis chamber 1a in the above-described embodiment, which does not limit the invention. Instead, in supplying the gas at a high flow rate to the analysis chamber 1a, the gas passing through the high flow rate capillary 63 alone may be supplied.

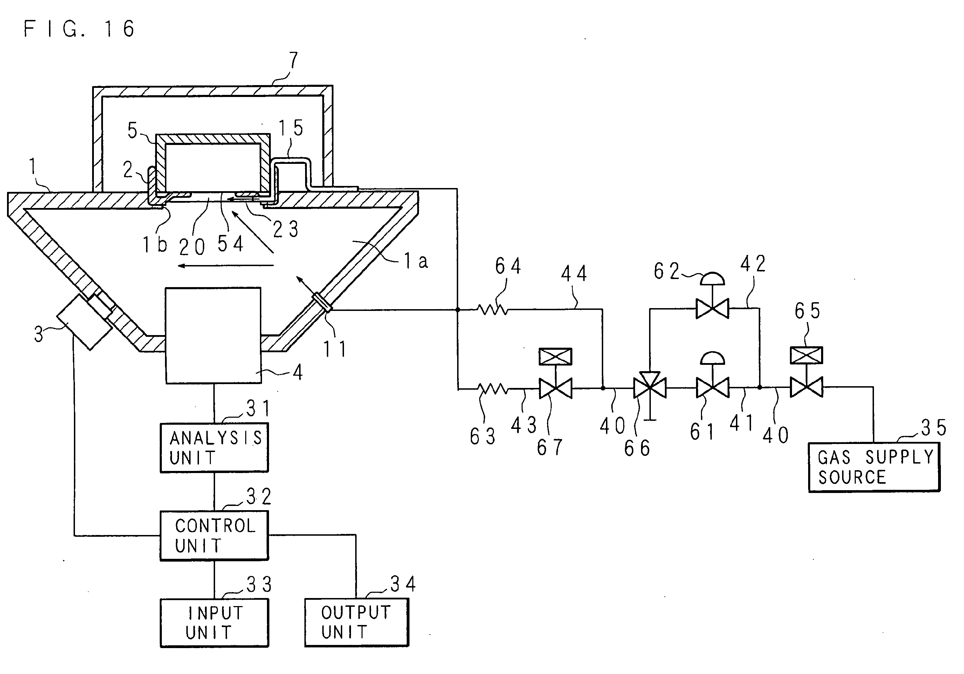

The gas is supplied to the analysis chamber 1a through the injection port 11 and the gas is further injected to the window material space 20 through the connection port 8b and the injection tube 15 in the above-described embodiment, which does not limit the invention. Instead, the gas may be supplied individually to the analysis chamber 1a and the window material space 20 from the tube 40. FIG. 16 is a schematic diagram illustrating the structure of a fluorescent X-ray analyzer employing this configuration. In FIG. 16, like reference numerals are used to refer to like elements illustrated in FIGS. 3, 8 and 12.

In the fluorescent X-ray analyzer of FIG. 16, a gas is supplied to an analysis chamber 1a through an injection port 11 and is supplied to a window material space 20 through an injection tube 15. The injection tube 15 is connected to a tube 40. A branch tube 43 and a branch tube 44 branched in the middle of the tube 40 are joined with each other, and the tube 40 further branches at a downstream side of the joining point into the branch tubes 43 and 44, and the thus branched tubes of the tube 40 are respectively connected to the injection port 11 and the injection tube 15. When a flow adjusting on-off valve 67 is opened, a gas passing through a high flow rate capillary 63 and a low flow rate capillary 64 is supplied to the analysis chamber 1a at a high flow rate through the injection port 11 and is supplied to the window material space 20 at a high flow rate through the injection tube 15. On the other hand, when the flow adjusting on-off valve 67 is closed, the gas passing through the small flow rate capillary 64 alone is supplied to the analysis chamber 1a at a low flow rate through the injection port 11 and is supplied to the window material space 20 at a low flow rate through the injection tube 15.

Also in this modification, a plurality of gases may be alternatively used as the displacement gas, and since the flow rate per unit time of the gas to be supplied to the analysis chamber 1a and the window material space 20 is adjusted by two stages, the amount of displacement gas to be consumed may be suppressed while retaining the accuracy of the fluorescent X-ray analysis. Furthermore, since the gas is supplied individually to the analysis chamber 1a and the window material space 20, the air inside a space where primary X-rays and fluorescent X-rays pass may be efficiently replaced.

Incidentally, the on-off valve 65, the selector valve 66 and the flow adjusting on-off valve 67 are electromagnetic valves to be controlled by the control unit 32 in the above-described embodiment, which does not limit the invention. Instead, the on-off valve 65, the selector valve 66 and the flow adjusting on-off valve 67 may be manually operated by a user. Also, the two kinds of pressure adjustors are provided in parallel in the tube 40 for alternatively using two kinds of gases as the displacement gas in the above-described embodiment, which does not limit the invention. Instead, the fluorescent X-ray analyzer may employ a configuration in which three or more kinds of gases may be alternatively used by providing three or more kinds of pressure adjustors in parallel in the tube 40.

Although the preferred embodiments of the invention have been specifically described so far, the embodiments are merely illustrative and not restrictive, and hence, the structure, the operation and the like may be appropriately changed. For example, the arrangement of the X-ray tube 3, the X-ray detector 4 and the like in the housing 1 is not limited to that illustrated in the drawing. The X-ray detector 4 is disposed directly below the cell holder 2 and the sample cell 5, and the X-ray tube 3 is disposed in the position diagonally below at an angle of 30°, which does not limit the invention. Instead, for example, the X-ray tube 3 may be disposed directly below the cell holder 2 and the sample cell 5 with the X-ray detector 4 disposed in a position diagonally below at an angle of 30°, or another arrangement may be employed. Moreover, the gas used for replacing the air inside the analysis chamber 1a and the window material space 20 is not limited to the helium gas or the nitrogen gas but may be any gas in accordance with a sample to be analyzed.

Furthermore, the shape of the sample cell 5 illustrated in FIG. 5 or the like is merely illustrative and not restrictive, and the sample cell 5 may be any vessel as far as the first X-ray transmission window material 54 is provided on the bottom thereof. The shape of the injection tube 15 illustrated in FIG. 7B or the like (i.e., the shape having the end portion bent in the substantially L-shape) is merely illustrative and not restrictive, and another shape may be employed. For example, the injection tube 15 may exclude the first portion 15a horizontally disposed in the injection hole 25 and may employ a configuration for injecting the gas such as the helium gas into the window material space 20 through an air outlet formed on a side face of the second portion 15b. Furthermore, the cell holder 2 is removably attached on the housing 1 in the embodiment, which does not limit the invention, and instead, the second X-ray transmission window material 23 may be fixed on the housing 1. In this case, the supporting part 24 may be provided separately from the second X-ray transmission window material 23. Also, the sample cell 5, the first X-ray transmission window material 54 and the second X-ray transmission window material 23 may be general-purpose exchangeable and expendable supplies and may be excluded in, for example, selling the fluorescent X-ray analyzer.

## Claims

1. A fluorescent X-ray analyzer including X-ray irradiating means (3) for irradiating, with primary X-rays, a sample contained in a sample container (5) through a first X-ray transmission window material (54) covering an opening (52d) of the sample container (5) and detecting means (4) for detecting fluorescent X-rays generated through irradiation with the primary X-rays, **characterized in that** a first closed space (1a) including the X-ray irradiating means (3) and the detecting means (4) has an opening portion (1b) for transmitting the primary X-rays irradiating the sample and the fluorescent X-rays emitted from the sample, and **characterized by** comprising:
a placing section (2), for placing the sample container (5) thereon, including a second X-ray transmission window material (23) provided on the opening portion (1b) for covering the opening portion (1b); and
supplying means (11, 15) for supplying a prescribed gas to the first closed space (1a) and a second closed space (20) formed between the first X-ray transmission window material (54) and the second X-ray transmission window material (23) in placing the sample container (5) on the placing section (2).

2. The fluorescent X-ray analyzer according to claim 1, wherein the supplying means (11, 15) supplies the prescribed gas to the first closed space (1a) and the second closed space (20) after placing the sample container (5) on the placing section (2) and covering the sample container (5) placed on the placing section (2) with a prescribed covering member (7).

3. The fluorescent X-ray analyzer according to claim 1 or 2, wherein the placing section (2) includes:
an inner frame (21) for supporting the sample container (5) placed thereon;
an outer frame (22) holding the second X-ray transmission window material (23) together with the inner frame (21); and
a through hole (25) communicating inside and outside of the second closed space (20) formed by the first X-ray transmission window material (54), the inner frame (21) and the second X-ray transmission window material (23) held by the inner frame (21) and the outer frame (22) in placing the sample container (5) on the placing section (2).

4. The fluorescent X-ray analyzer according to claim 1, wherein the placing section (2) includes:
an opening (21c) for transmitting the primary X-rays emitted from the X-ray irradiating means (3) to the sample container (5); and
a supporting part (24) for supporting the sample container (5) in such a manner that the primary X-rays passing through the opening (21c) reaches the first X-ray transmission window material (54) covering the opening (52d) of the sample container (5), and
the supporting part (24) supports the sample container (5) by coming into contact with the first X-ray transmission window material (54) covering the opening (52d) inside the opening (52d) of the sample container (5).

5. The fluorescent X-ray analyzer according to claim 4, wherein a portion of the supporting part (24) in contact with the first X-ray transmission window material (54) is a flat plane, and the flat plane is in close contact with the first X-ray transmission window material (54).

6. The fluorescent X-ray analyzer according to claim 4 or 5, wherein the opening (21c) of the placing section (2) is capable of being covered by the second X-ray transmission window material (23),
the supporting part (24) is provided on an entire periphery of the opening (21c), and
the placing section (2) includes a through hole (25) communicating inside and outside of the second closed space (20) formed by the first X-ray transmission window material (54), the supporting part (24) and the second X-ray transmission window material (23) to cover the opening (21c) in placing the sample container (5) thereon.

7. The fluorescent X-ray analyzer according to claim 6, further comprising:
an injection tube (15) for injecting the gas into the second closed space (20) through the through hole (25).

8. The fluorescent X-ray analyzer according to claim 6 or 7, wherein the placing section (2) includes:
a ring-shaped inner frame (21) on which the supporting part (24) is provided; and
a ring-shaped outer frame (22) externally fit on the inner frame (21), and
the inner frame (21) and the outer frame (22) fit on each other are capable of holding the second X-ray transmission window material (23) therebetween.

9. The fluorescent X-ray analyzer according to any of claims 4 through 8,
wherein the placing section (2) is removably attached on a housing (1) holding the X-ray irradiating means (3) and the detecting means (4), and
the fluorescent X-ray analyzer further comprises a fixing section (13) for fixing the placing section (2) by pressing the placing section (2) against the housing (1).

10. The fluorescent X-ray analyzer according to claim 1, further comprising:
a tube (40) for supplying a gas to the first closed space (1a) and the second closed space (20);
a plurality of pressure adjustors (61, 62) provided in parallel in the middle of the tube (40); and
path switching means (66) for alternatively switching a path of a gas to be supplied to the first closed space (1a) and the second closed space (20) out of paths passing through the plurality of pressure adjustors (61, 62),
wherein each of the plurality of pressure adjustors (61, 62) adjusts a pressure of a gas to be supplied to the first closed space (1a) and the second closed space (20) to a pressure in accordance with each of a plurality of kinds of gases.

11. The fluorescent X-ray analyzer according to claim 10, wherein each of the plurality of pressure adjustors (61, 62) is configured in such a manner that a flow rate per unit time of a gas to be supplied to the first closed space (1a) and the second closed space (20) through the tube (40) is a precedently determined common flow rate not depending upon the kinds of gases.

12. The fluorescent X-ray analyzer according to claim 11, further comprising:
flow rate adjusting means (67) for adjusting a flow rate per unit time of a gas to be supplied to the first closed space (1a) and the second closed space (20) to one of two flow rates precedently determined.

13. The fluorescent X-ray analyzer according to claim 12, wherein the tube (40) branches into two branch tubes (43, 44) different from each other in a flow rate per unit time of a gas passing therethrough,
the two branch tubes (43, 44) are both connected to the first closed space (1a) and the second closed space (20), and
the flow rate adjusting means (67) is an on-off valve (67) for opening/closing one of the branch tubes (43) allowing a gas to pass therethrough at a relatively high flow rate per unit time out of the two branch tubes (43, 44).

14. A fluorescent X-ray analysis method for performing fluorescent X-ray analysis of a sample by using the fluorescent X-ray analyzer of claim 12 or 13, **characterized by** comprising the steps of:
allowing the path switching means (66) to switch a path of a gas in such a manner that a gas passes through any of the pressure adjustors (61, 62) corresponding to a kind of gas to be supplied to the first closed space (1a) and the second closed space (20);
allowing the flow rate adjusting means (67) to adjust a flow rate per unit time of the gas to be supplied to the first closed space (1a) and the second closed space (20) to a higher flow rate out of the two flow rates;
allowing the flow rate adjusting means (67) to adjust the flow rate per unit time of the gas to be supplied to the first closed space (1a) and the second closed space (20) to a lower flow rate out of the two flow rates after continuously supplying the gas to the first closed space (1a) and the second closed space (20) for a prescribed period of time; and
starting the fluorescent X-ray analysis after adjusting the flow rate per unit time of the gas to be supplied to the first closed space (1a) and the second closed space (20) to the lower flow rate out of the two flow rates.
